# FASCICULE DE BREVET EUROPEEN

(11) **EP 3 853 649 B1**
(45) Date de publication et mention de la délivrance du brevet: **02.08.2023**
(21) Numéro de dépôt: 20780767.8
(22) Date de dépôt: 26.08.2020
(51) Int. Cl.: G02B 7/185, G02B 26/06

(54) **DISPOSITIF D'OPTIQUE ADAPTATIVE DE CONSTRUCTION SIMPLIFIEE ET PROCEDE DE FABRICATION ASSOCIE**
ADAPTIVE OPTISCHE VORRICHTUNG MIT VEREINFACHTER KONSTRUKTION UND ZUGEHÖRIGES HERSTELLUNGSVERFAHREN
ADAPTIVE OPTICAL DEVICE OF SIMPLIFIED CONSTRUCTION AND ASSOCIATED MANUFACTURING METHOD

(30) Priorité: 30.08.2019 FR 1909594
(43) Date de publication de la demande: 28.07.2021
(73) Titulaire: ALPAO, 38330 Montbonnot-Saint-Martin (FR)
(72) Inventeur: CHARTON, Julien, Gérard, 38660 LUMBIN (FR); LASLANDES, Marie, Emilie, 38610 GIERES (FR)
(74) Mandataire: Weber, Jean-François
(86) Numéro de dépôt international: PCT/FR2020/000227
(87) Numéro de publication internationale: WO 2021/038140

(56) Documents cités:
- EP-A1- 3 203 299
- WO-A1-2004/057407
- WO-A1-2010/058204

## Description

### DOMAINE TECHNIQUE

La présente invention concerne le domaine technique général de l'optique adaptative, pour des applications aussi diverses que l'astronomie, la médecine, notamment l'ophtalmologie, l'utilisation de lasers, la microscopie, la microélectronique, etc.

La présente invention se rapporte plus particulièrement à un dispositif d'optique adaptative comportant une plaque déformable destinée à déformer un front d'onde incident par réfraction et/ou réflexion.

La présente invention concerne également un procédé de fabrication d'un tel dispositif d'optique adaptative.

### TECHNIQUE ANTERIEURE

Il est connu d'employer des dispositifs optiques actifs, c'est-à-dire adaptatifs, par exemple des miroirs déformables permettant de générer ou de corriger de manière contrôlée des aberrations optiques, telles que l'astigmatisme, dans un front d'onde incident. En pratique, un tel miroir déformable peut changer de configuration pour modifier de manière souhaitée la forme d'un front d'onde, grâce à des déformations réalisées à la surface d'un tel miroir sur laquelle se réfléchit le front d'onde incident. Le front d'onde incident qui arrive sur la surface du miroir est déformé en un front d'onde réfléchi dans lequel l'aberration optique initiale (celle du front d'onde incident) a été générée ou corrigée par le miroir déformable. On connaît en particulier des miroirs adaptatifs dans le domaine de l'astronomie, et qui comprennent une plaque déformable circulaire comportant une face réfléchissante, ladite plaque étant reliée à, et entourée par, un anneau rigide et épais, celui-ci étant prolongé vers l'extérieur par une pluralité de bras. Chaque bras est relié à une paire d'actionneurs destinés à appliquer une force ou un couple de forces à la périphérie de l'anneau pour déformer la plaque, et ainsi déformer le front d'onde se réfléchissant sur la face réfléchissante de ladite plaque. Afin de réaliser une déformation satisfaisante et pour diminuer le risque d'abîmer la plaque, celle-ci présente de surcroît une épaisseur significative et avec une pupille centrale spécifique et épaisse.

Ces miroirs adaptatifs connus, s'ils donnent globalement satisfaction dans leur domaine de destination (astronomie), n'en présentent pas moins un certain nombre d'inconvénients.

La conception de ces miroirs connus nécessite en effet la mise en oeuvre d'un nombre important d'actionneurs, puisque chaque bras doit être équipé d'une paire d'actionneurs pour obtenir une amplitude de déformation désirée notamment. Ensuite, l'anneau étant relativement rigide et épais et la plaque étant également d'épaisseur relativement importante, il est nécessaire de dimensionner les actionneurs en conséquence pour qu'ils exercent un couple suffisant sur les bords de la plaque via l'anneau pour déformer celle-ci, l'ensemble du système étant relativement lourd. Enfin, les bras doivent être eux-mêmes rigides et épais, de façon à pouvoir résister aux forces exercées par les paires d'actionneurs qui leurs sont associés. De surcroît, pour déformer la plaque de manière voulue, il est nécessaire selon les configurations actuelles de miroirs déformables à bras d'utiliser un grand nombre de bras, et donc un grand nombre d'actionneurs.

Ces différentes exigences et contraintes renchérissent ainsi le coût de fabrication et entraînent un encombrement et un poids significatifs, ainsi qu'une inertie (ou un temps de réaction) à la déformation importante et un montage et un réglage particulièrement difficiles de ces miroirs connus.

Par ailleurs, lors de la fabrication, les actionneurs de chaque paire doivent être positionnés de manière extrêmement précise non seulement par rapport à leur bras respectif, mais également l'un par rapport à l'autre. Plus compliqué encore, les nombreuses paires d'actionneurs doivent être positionnées de façon particulièrement précise et rigoureuse les unes par rapport aux autres.

Ces deux dernières contraintes augmentent d'autant plus le coût de fabrication de ces miroirs connus, la mise en place correcte des paires d'actionneurs s'avérant en pratique particulièrement complexe.

Pour ces miroirs connus, il existe donc, de par leur conception même, un risque significatif de positionnement incorrect de certains actionneurs, qui augmente le risque d'imprécision dans le contrôle de la déformation de la face réfléchissante de la plaque, se traduisant par un défaut de la correction ou de l'introduction voulue d'une aberration optique dans un front d'onde incident. La fiabilité de ces miroirs connus s'en trouve dès lors affectée.

En définitive, les miroirs connus décrits dans ce qui précède s'avèrent être relativement encombrants, lourds et onéreux, et ne présentent pas une fiabilité et une réactivité optimales. Le document EP3203299A1 décrit un miroir déformable avec une membrane déformable, une structure porteuse et un actionneur avec une première et une deuxième extrémité. Le document WO2010/058204A1 décrit une suspension passive pour un miroir bimorphe. Le document WO2004/057407A1 décrit un miroir déformable hybride avec une surface réfléchissante prévue sur un substrat et une couche de matériau déformable attachée au substrat, celui-ci étant supporté par un actionneur.

### EXPOSE DE L'INVENTION

Les objets assignés à l'invention visent par conséquent à remédier aux différents inconvénients susmentionnés et à proposer un nouveau dispositif d'optique adaptative robuste, compact, léger, dont le coût de fabrication est maîtrisé, facile et qui est rapide à mettre en oeuvre.

Un autre objet assigné à l'invention vise à proposer un nouveau dispositif d'optique adaptative de structure simple et fiable.

Un autre objet assigné à l'invention vise à proposer un nouveau dispositif d'optique adaptative dont la conception permet une mise en place au sein d'un système optique facile, rapide et à moindre coût.

Un autre objet assigné à l'invention vise à proposer un nouveau dispositif d'optique adaptative adapté pour générer de façon particulièrement simple, fiable et maîtrisée, une courbure (concavité ou convexité) désirée de sa plaque déformable, en vue par exemple de déformer un front d'onde incident de façon contrôlée, précise et rapide.

Un autre objet assigné à l'invention vise à proposer un nouveau dispositif d'optique adaptative dont la mise en oeuvre pour introduire ou corriger une aberration optique par réflexion et/ou une réfraction est particulièrement aisée, tout en étant facile et rapide à entretenir et à régler.

Enfin, un autre objet assigné à l'invention vise à proposer un nouveau dispositif d'optique adaptative qui, tout en étant de construction extrêmement simplifiée et légère, permet d'obtenir de façon précise et contrôlée une excellente diversité d'amplitude de déformation.

Par ailleurs, un autre objet assigné à l'invention vise à proposer un nouveau procédé de fabrication d'un dispositif d'optique adaptative qui est aisé, rapide et peu coûteux à mettre en oeuvre, tout en permettant d'obtenir un dispositif d'optique adaptative particulièrement fiable, compact, réactif, léger et robuste.

Les objets assignés à l'invention sont atteints à l'aide d'un dispositif d'optique adaptative comportant une plaque déformable destinée à déformer un front d'onde incident par réfraction et/ou réflexion, caractérisé en ce qu'il comprend en outre au moins :
- des pattes attachées de manière fixe à ladite plaque déformable,
- un bâti fixe par rapport à ladite plaque déformable,
- une pluralité d'actionneurs périphériques,
chaque patte comprenant une partie mobile reliée à au moins l'un des actionneurs périphériques respectif pour que ce dernier puisse déformer localement ladite patte afin que cette dernière transmette un effort de déformation à ladite plaque déformable, chaque patte comprenant en outre une partie fixe respective qui est attachée de manière fixe audit bâti pour être immobilisée relativement à ce dernier.

Les objets assignés à l'invention sont également atteints à l'aide d'un procédé de fabrication d'un dispositif d'optique adaptative comportant une étape primaire de réalisation ou de fourniture d'une plaque déformable destinée à déformer un front d'onde incident par réfraction et/ou réflexion, le procédé étant caractérisé en ce qu'il comprend en outre au moins :
- une étape secondaire de réalisation de pattes attachées de manière fixe à ladite plaque déformable,
- une étape d'équipement, lors de laquelle une partie mobile respective de chaque patte est reliée à au moins un actionneur respectif, de façon que ce dernier puisse déformer localement ladite patte afin que cette dernière transmette un effort de déformation à ladite plaque déformable,
- une étape de fixation, lors de laquelle une partie fixe respective de chaque patte est attachée de manière fixe à un bâti fixe par rapport à ladite plaque déformable pour être immobilisée relativement à ce dernier.

### DESCRIPTIF SOMMAIRE DES DESSINS

D'autres particularités et avantages de l'invention apparaîtront et ressortiront plus en détail à la lecture de la description faite ci-après, en référence aux dessins annexés, donnés uniquement à titre d'exemples illustratifs et non limitatifs, dans lesquels :
- la figure 1 illustre, selon une vue en perspective, une coupe selon un plan sagittal d'un exemple de dispositif d'optique adaptative de l'invention, vu du côté de la face cachée de la plaque.
- la figure 2 illustre, selon une vue schématique de côté, une coupe selon un plan sagittal du dispositif d'optique adaptative de la figure 1.
- la figure 3 illustre, selon une vue schématique de côté, une coupe selon un plan sagittal d'un mode de réalisation particulier du dispositif d'optique adaptative, avec un angle dièdre obtus entre la plaque déformable et les pattes, sans bâti ni actionneur.
- la figure 4 illustre, selon une vue schématique de côté, une coupe selon un plan sagittal d'un autre mode de réalisation particulier du dispositif d'optique adaptative, avec un angle dièdre aigu entre la plaque déformable et les pattes, sans bâti ni actionneur.
- la figure 5 illustre une coupe selon un plan sagittal d'un autre mode de réalisation encore du dispositif d'optique adaptative, avec un angle dièdre droit entre la plaque déformable et les pattes, sans bâti ni actionneur.
- la figure 6 illustre une coupe selon un plan sagittal d'encore un autre mode de réalisation du dispositif d'optique adaptative, avec des pattes de forme arrondie, sans bâti ni actionneur, avec un angle dièdre obtus entre la plaque déformable et les pattes.
- la figure 7 illustre, selon une vue en perspective, la plaque munie de pattes du dispositif d'optique adaptative de la figure 9, la plaque déformable étant vue du côté de sa face incidente.
- la figure 8 illustre, selon une vue en perspective, la plaque et les pattes de la figure 9, les pattes étant ici équipées chacune d'un actionneur périphérique respectif, la plaque déformable étant vue du côté de sa face cachée.
- la figure 9 illustre, selon une vue en perspective, un exemple de dispositif d'optique adaptative de l'invention.
- la figure 10 illustre, selon une vue en perspective, une première alternative d'un procédé de fabrication selon l'invention pour la réalisation du dispositif d'optique adaptative de la figure 9, muni en plus d'un actionneur central.
- la figure 11 illustre, selon une vue en perspective, une partie d'une seconde alternative d'un procédé de fabrication selon l'invention pour la réalisation du dispositif d'optique adaptative de la figure 9.
- la figure 12 illustre, selon une vue en perspective, un exemple de réalisation d'une plaque déformable hexagonale et de pattes trapézoïdales d'un dispositif d'optique adaptative de l'invention, vu du côté de la face cachée de la plaque.
- la figure 13 illustre, selon une vue en perspective, un autre exemple de réalisation d'une plaque déformable et de pattes d'un dispositif d'optique adaptative de l'invention, vu du côté de la face cachée de la plaque.
- la figure 14 illustre, selon une vue en perspective, un exemple particulier de réalisation d'une plaque déformable et de pattes selon un dispositif d'optique adaptative de l'invention, vu du côté de la face cachée de la plaque.
- la figure 15 illustre, selon une vue en perspective, un dispositif optique adaptative selon l'invention dont la plaque déformable est déformée par les actionneurs de façon à présenter des lignes de contour d'un exemple de mode de déformation.

### MEILLEURE MANIERE DE REALISER L'INVENTION

L'invention concerne, selon un premier aspect, illustré aux figures, un dispositif d'optique adaptative 1.

Le dispositif d'optique adaptative 1 est donc avantageusement destiné à être utilisé dans un système nécessitant l'emploi d'optique adaptative, par exemple un système d'observation microscopique, un système d'observation astronomique, un système de correction visuelle de turbulence atmosphérique, un système d'agrandissement ou de rétrécissement d'image, un système de zoom, un système de déformation d'image, ou un système d'imagerie ophtalmologique.

Selon la présente invention, et comme représenté aux figures, le dispositif d'optique adaptative 1 comporte une plaque déformable 2 destinée à déformer un front d'onde incident par réfraction et/ou réflexion.

De manière préférentielle, le dispositif d'optique adaptative 1 constitue un miroir déformable et/ou une lentille adaptative. Par exemple, le dispositif d'optique adaptative 1 est destiné à introduire ou corriger une aberration optique dans ledit front d'onde (ou un rayon) lumineux. Le dispositif d'optique adaptative 1 est donc avantageusement conçu, en particulier lorsqu'il constitue un miroir déformable, pour réfléchir un front d'onde incident de manière dynamique, c'est-à-dire modifiable, et contrôlée, afin par exemple d'introduire ou de corriger ladite aberration optique dans ledit front d'onde. De préférence, le dispositif d'optique adaptative 1, en particulier lorsqu'il constitue une lentille adaptative, est conçu pour réfracter un front d'onde de manière dynamique, c'est-à-dire modifiable, et contrôlée, afin par exemple d'introduire ou de corriger ladite aberration optique dans ledit front d'onde. Ladite lentille adaptative constitue par exemple un milieu réfringent, par exemple plus réfringent que l'air ou l'environnement de ladite lentille, de façon à déformer ledit front d'onde incident. Par exemple, Ladite plaque déformable 2 forme une des faces de ladite lentille adaptative, et celle-ci comprend au moins un matériau de réfraction, tel qu'un fluide notamment, ou encore un solide, voire même un gaz, ledit matériau réfraction présentant un indice de réfraction différent de 1, en particulier supérieur à 1. Ladite lentille adaptative est préférentiellement au moins partiellement déformable, notamment au niveau de ladite plaque déformable 2.

Avantageusement, en l'absence d'influence extérieure, ladite plaque déformable 2 est, par construction, de forme globalement plane ou courbe. Par exemple, ladite plaque déformable 2 est légèrement bombée, c'est-à-dire convexe (ou légèrement concave, selon le point de vue). Ladite convexité (ou concavité, selon le point de vue) de ladite plaque déformable 2 est de préférence suffisamment faible, c'est-à-dire présentant un rayon de courbure relativement important par rapport aux dimensions de ladite plaque déformable 2, pour que la surface de ladite plaque déformable 2 (légèrement) bombée puisse être assimilée, au moins localement (c'est-à-dire au moins sur une fraction de l'aire de ladite plaque déformable 2), à une surface plane.

De préférence, et comme représenté aux figures, ladite plaque déformable 2 s'étend sensiblement, au repos, selon un premier plan moyen d'extension P. Ainsi, au repos, c'est-à-dire avantageusement en l'absence de sollicitation mécanique de déformation exercée sur ladite plaque déformable 2, par exemple par un actionneur, celle-ci s'inscrit avantageusement (qu'elle soit plane ou légèrement bombée) dans ledit premier plan moyen d'extension P, lequel coupe préférentiellement ladite plaque déformable 2 dans la majorité, la quasi-totalité ou la totalité de son épaisseur.

Avantageusement, ladite plaque déformable 2 est une plaque mince, déformable, qui se déforme en particulier sous l'action d'une force externe exercée à sa surface, notamment une force exercée par au moins un actionneur.

De préférence, ladite plaque déformable 2 est fabriquée à partir d'un matériau relativement flexible, mais possédant tout de même une certaine tenue mécanique, de sorte qu'elle ne se déforme que peu ou pas du tout tant qu'elle n'est pas soumise à un minimum de pression ou de traction extérieure. Ainsi, de façon avantageuse, ladite plaque déformable 2 présente une tenue mécanique propre, n'est pas flasque, et présente cependant une souplesse et une flexibilité suffisantes pour subir une légère déformation élastique, c'est-à-dire réversible, en particulier lorsqu'elle est sollicitée en flexion, notamment par des actionneurs (qui seront décrits plus en détail ci-après).

Préférentiellement, ladite plaque déformable 2 est principalement réalisée en silicium, en métal (par exemple en acier ou en aluminium), en alliage, en polymère(s), en matériau(x) composite(s), en céramique(s), en matériau(x) amorphe(s) vitreux (par exemple en verre organique ou minéral comme le pyrex), en quartz ou ses dérivés, ou en un assemblage de plusieurs matériaux différents, notamment parmi les matériaux susmentionnés. De façon avantageuse, ladite plaque déformable 2 présente une épaisseur moyenne sensiblement comprise entre 5 et 500 µm. De manière préférentielle, la plaque déformable 2, pour la fonction visée par l'invention, présente une taille relativement modeste. Ladite plaque déformable 2 présente par exemple un diamètre (notamment dans le cas où la plaque déformable 2 est circulaire) et/ou une plus grande dimension (notamment une longueur, comme dans les cas où la plaque déformable 2 est elliptique ou rectangulaire) compris(e) entre 5 et 300 mm.

De préférence, et comme illustré aux figures, ladite plaque déformable 2 présente un centre géométrique C, par exemple un centre de gravité et/ou un barycentre.

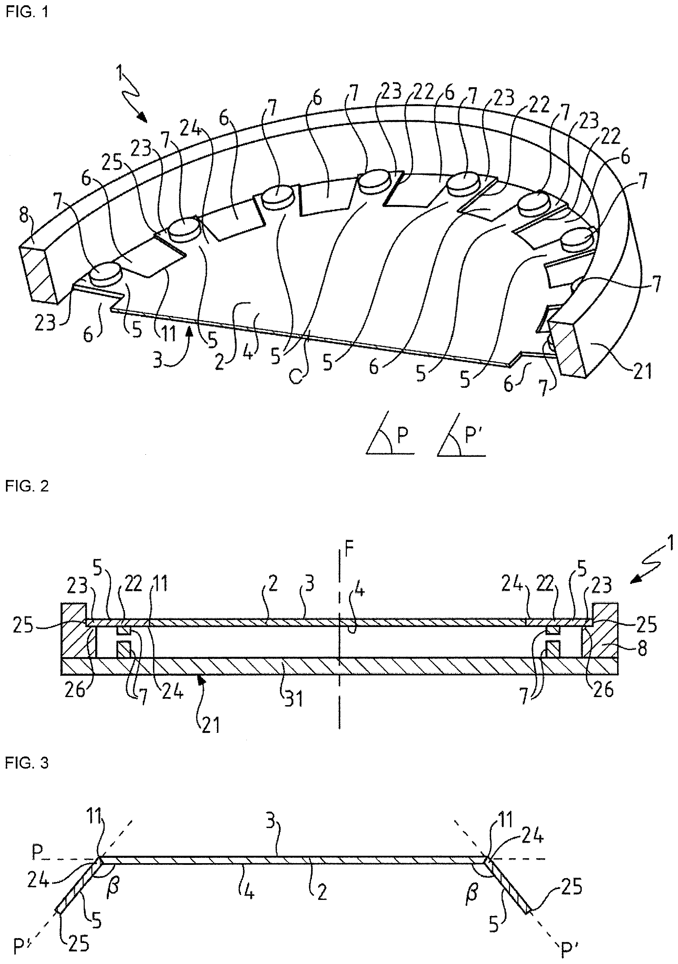

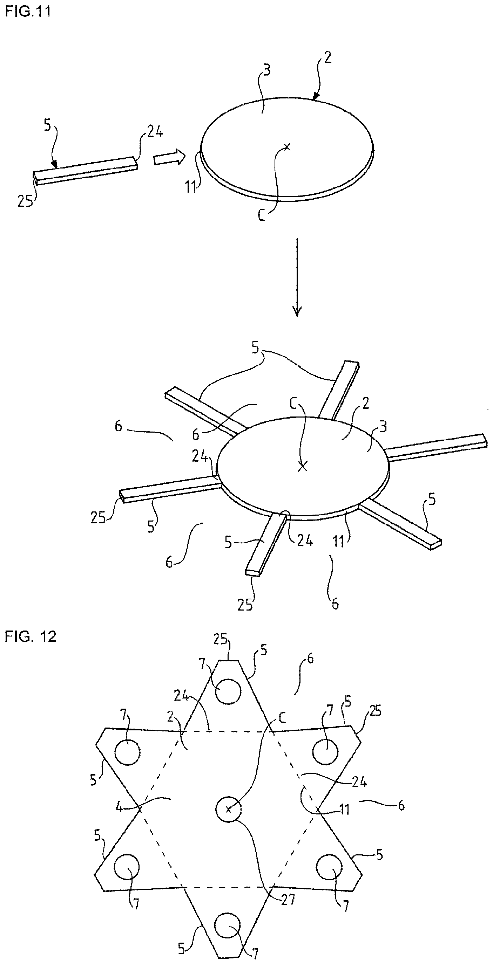

Préférentiellement, ladite plaque déformable 2 présente un bord périphérique 11. Par exemple, et comme illustré notamment aux figures 1, 7 à 11, 13 et 14, ladite plaque déformable 2 présente une forme générale sensiblement circulaire ou elliptique. Ainsi, ledit bord périphérique 11, qui délimite ladite plaque déformable 2, décrit avantageusement, dans ces deux derniers exemples un cercle ou une ellipse. Alternativement, ladite plaque déformable 2 est de forme triangulaire, rectangulaire, carrée, trapézoïdale, ou tout autre géométrie ou polygone approprié. Ainsi, ledit bord périphérique 11 décrit alternativement un polygone, par exemple un rectangle, ou encore un hexagone, comme illustré à la figure 12.

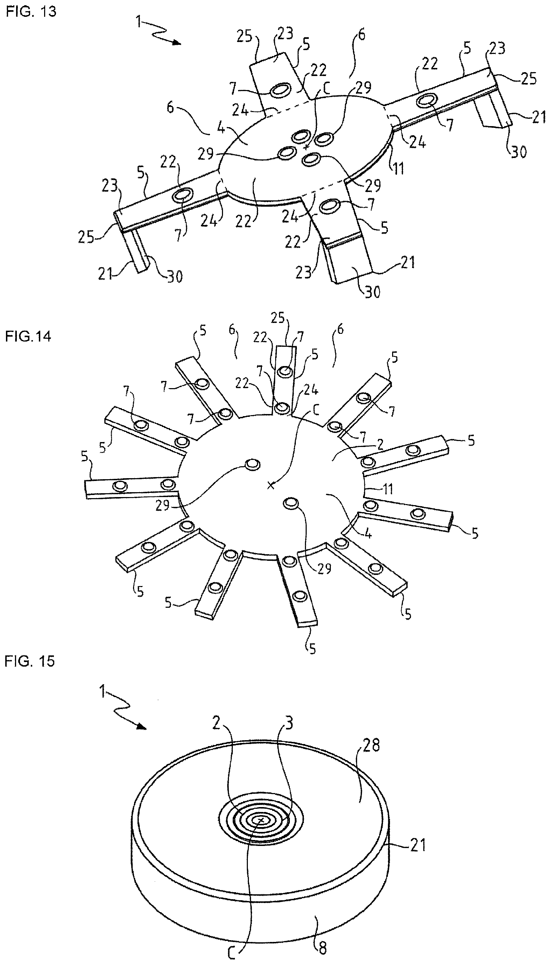

Selon l'invention, ladite plaque déformable 2 possède une face incidente 3 destinée à recevoir ledit front d'onde. Ladite face incidente 3, préférentiellement, comprend ou forme une surface optique, utile pour réaliser une application dans un système d'optique adaptative, ladite surface optique étant de préférence destinée à recevoir ledit front d'onde incident. Ladite face incidente 3 (et plus précisément ladite surface optique) présente de préférence une surface sensiblement lisse, destinée à recevoir ledit front d'onde incident, ladite plaque déformable 2 et/ou ladite face incidente 3 étant conçue pour introduire une aberration optique ou la corriger quand ladite plaque déformable 2 est activement déformée. Ladite plaque déformable 2 est ainsi préférentiellement destinée à être déformée de manière réversible selon plusieurs configurations de déformation, dont l'une est illustrée à la figure 15. Ainsi, ladite face incidente 3 est avantageusement unie (c'est-à-dire d'une seule pièce, d'un seul tenant, présentant une continuité visuelle, physique et mécanique), sans inégalité ni aspérité, et est préférentiellement destinée à recevoir ledit front d'onde incident.

Ladite plaque déformable 2 est avantageusement conçue pour recevoir, via ladite face incidente 3 en particulier, ledit front d'onde incident et le déformer de manière contrôlée de manière à émettre un front d'onde déformé (notamment réfléchi et/ou réfracté). Plus précisément, ladite plaque déformable 2 est de préférence conçue pour recevoir un front d'onde incident afin de :
- le refléter (avec une déformation) sous la forme d'un front d'onde réfléchi, en particulier lorsque le dispositif d'optique adaptative 1 est un miroir déformable, et/ou
- le réfracter (c'est-à-dire le transmettre avec une déformation) sous la forme d'un front d'onde réfracté, en particulier lorsque le dispositif d'optique adaptative 1 est une lentille adaptative.

Ledit faisceau réfléchi et/ou réfracté présente par exemple soit une aberration optique non présente dans le front d'onde incident, soit une correction d'une aberration optique présente dans le front d'onde incident, ou encore les deux. De préférence, ledit front d'onde réfléchi et/ou réfracté est donc déformé par rapport audit front d'onde incident. En d'autres termes, le dispositif d'optique adaptative 1 est de façon avantageuse conçu pour déformer de manière contrôlée le front d'onde incident, et ce selon plusieurs configurations successives puisque le dispositif d'optique adaptative 1 est par définition adaptable selon la modification désirée, le front d'onde incident, l'angle d'incidence de ce dernier, le milieu, etc. Optionnellement, le dispositif d'optique adaptative peut être conçu pour réfléchir une partie du front d'onde incident et en réfracter une autre.

Avantageusement, ladite plaque déformable 2 possède en outre une face cachée 4 opposée à ladite face incidente 3. Ainsi, de manière avantageuse, lesdites faces incidente 3 et cachée 4 se trouvent sur des faces opposées l'une à l'autre de ladite plaque déformable 2. Ladite plaque déformable 2 présente ainsi avantageusement une forme globalement plane, ou alternativement sensiblement courbe, au repos, dans laquelle lesdites faces incidente 3 et cachée 4 sont séparées par l'épaisseur de ladite plaque déformable 2, ladite épaisseur étant préférentiellement relativement faible par rapport à des dimensions d'extension radiales desdites deux faces 3, 4 de ladite plaque déformable 2. Selon une première alternative, ladite face incidente 3 est (au moins localement) sensiblement parallèle à ladite face cachée 4. Selon une autre alternative, notamment dans certains cas où le dispositif d'optique adaptative 1 est une lentille adaptative (ou un miroir déformable spécifique), ladite face incidente 3 n'est pas parallèle à ladite face cachée 4, ladite plaque déformable 2 étant par exemple bombée sur deux faces opposées l'une à l'autre de ladite plaque déformable 2, c'est-à-dire en d'autres termes sensiblement convexe à la fois sur ladite face incidente 3 et ladite face cachée 4, ou au contraire sensiblement concave à la fois ladite face incidente 3 et ladite face cachée 4.

Lorsque le dispositif d'optique adaptative 1 constitue ledit miroir déformable, ladite face incidente 3 forme avantageusement une face réfléchissante. Bien évidemment, lorsque le dispositif d'optique adaptative 1 constitue ladite lentille adaptative, le rayon incident traverse avantageusement ladite plaque déformable 2 en entrant dans cette dernière via ladite face incidente 3 et en ressortant de ladite plaque déformable 2 via ladite face cachée 4. L'épaisseur de ladite plaque déformable 2 peut donc jouer un rôle dans la déformation du front d'onde incident, tandis que ladite face cachée 4 n'est alors « *cachée* » que du point de vue du front d'onde incident.

Avantageusement, ladite plaque déformable 2 est destinée à subir des forces et/ou des couples de forces de pression et/ou de traction, par exemple appliquées à la périphérie de ladite plaque déformable 2, et plus précisément audit bord périphérique 11, permettant de déformer ladite plaque déformable 2 de manière réversible (c'est-à-dire avantageusement dans le domaine élastique), contrôlée, et appropriée, c'est-à-dire d'une façon satisfaisante pour que le dispositif d'optique adaptative 1 remplisse une fonction dans un système d'optique adaptative. De préférence, lesdites forces et/ou des couples de forces sont appliquées du côté de ladite face cachée 4 et/ou sur cette dernière, par exemple afin de générer une convexité ou concavité sur ladite face incidente 3 opposée.

Lesdites faces incidente 3 et cachée 4 sont préférentiellement d'une seule pièce avec ladite plaque déformable 2, par exemple usinées dans un même matériau. Alternativement, ladite plaque déformable 2 est constituée de plusieurs parties de plaque(s) rapportées, par exemple collées, les unes avec les autres, l'une desdites parties de plaque(s) comprenant ladite face incidente 3 (ou une partie de cette dernière, par exemple ladite surface optique), et une autre desdites parties de plaque(s) comprenant ladite face cachée 4.

Selon l'invention, et comme illustré aux figures, le dispositif d'optique adaptative 1 comprend en outre des pattes 5 attachées de manière fixe à ladite plaque déformable 2. Ainsi, lesdites pattes 5 sont avantageusement solidaires de ladite plaque déformable 2, et ce de façon permanente, non réversible. En d'autres termes, lesdites pattes 5 sont de préférence en liaison encastrement avec ladite plaque déformable 2. De façon avantageuse, lesdites pattes 5 sont distinctes les unes des autres, c'est-à-dire préférentiellement non reliées directement les unes aux autres, lesdites pattes 5 étant par ailleurs avantageusement à distance les unes des autres. Chaque patte 5 est par exemple en forme d'une partie de plaque mince, déformable, qui se déforme et/ou se déplace avantageusement, par exemple se plie, sous l'action d'une force externe exercée à sa surface, notamment une force exercée par au moins un actionneur. Lesdites pattes 5 sont de préférence attachées directement à ladite plaque déformable 2, sans élément intermédiaire notable (autre que d'éventuels colle, cordon de soudure, etc.), et préférentiellement sans élément intermédiaire rigide et/ou présentant une tenue mécanique propre.

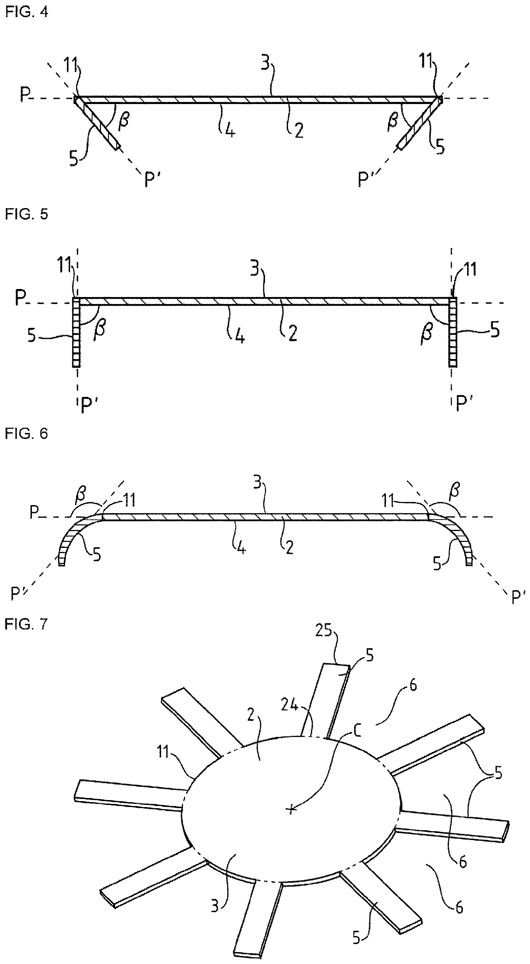

Préférentiellement, chacune desdites pattes 5 n'est pas directement solidaire des autres desdites pattes 5, c'est-à-dire qu'il peut être possible par exemple de plier l'une desdites pattes 5 sans que les autres desdites pattes 5 se plient ou se déplacent, ou du moins sans qu'elles se plient ou se déplacent de la même manière que ladite patte 5 considérée. Lesdites pattes 5 sont préférentiellement attachées à ladite plaque déformable 2 via ledit bord périphérique 11, et peuvent être sensiblement allongées. Préférentiellement, chaque patte 5 s'étend, à partir de ladite plaque déformable 2, radialement relativement audit centre géométrique C, par exemple vers l'extérieur, comme illustré notamment aux figures 1 à 3 et 7 à 14, ou selon un autre exemple vers l'intérieur, comme illustré à la figure 4, de préférence à partir dudit bord périphérique 11. De manière avantageuse, comme illustré aux figures, lesdites pattes 5 sont réparties angulairement de façon uniforme autour dudit centre géométrique Ç. Comme illustré aux figures, lesdites pattes 5 sont par exemple sensiblement toutes identiques les unes aux autres, bien qu'il soit également possible que certaines pattes 5 soient alternativement plus larges et/ou plus épaisses et/ou plus rigides et/ou plus longues que d'autres. Selon un mode de réalisation particulier, chaque patte 5 s'étend de manière régulière de part et d'autre d'un (seul) axe d'extension longitudinal respectif, de préférence de sorte qu'il existe un segment droit rectiligne passant à travers le matériau formant la patte 5 tout le long de cette dernière, comme illustré dans les modes de réalisations des figures 1 à 4 et 7 à 14. Préférentiellement, chaque axe d'extension passe par un axe central, lequel s'étend sensiblement perpendiculairement à la plaque déformable 2 et passe par ledit centre géométrique Ç.

De manière avantageuse, comme illustré dans les modes de réalisation particuliers représentés aux figures, ledit bord périphérique 11 est libre, à l'exception de ses liaisons avec lesdites pattes 5. En d'autres termes, le bord périphérique 11 n'est de préférence relié à aucune structure (distincte de la plaque déformable 2) à l'exception desdites pattes 5. Une telle configuration de bord périphérique 11 « *libre* » permet d'obtenir une large variété d'amplitude de déformation possible de ladite plaque déformable 2 et ce sans exercer de force importante sur les pattes 5, par exemple à l'aide des actionneurs périphériques 7 décrits plus en détail ci-après.

De préférence, le bord périphérique 11 ne présente avantageusement pas de surépaisseur significative, et par exemple n'est pas plus de trois fois, de préférence pas plus de deux fois, plus épais que le reste de la plaque déformable 2. En particulier, le bord périphérique 11 présente avantageusement une épaisseur similaire au reste de la plaque déformable 2, avec éventuellement une tolérance inférieure ou égale à 25%, plus préférentiellement inférieure ou égale à 15%. Préférentiellement, comme illustré aux figures, chaque patte 5 est séparée des pattes 5 qui lui sont adjacentes par des espaces 6. Chaque patte 5 se trouve ainsi avantageusement bordée par deux desdits espaces 6, séparés l'un de l'autre par ladite patte 5. Lesdits espaces 6 peuvent par exemple être assez larges et notamment aussi larges ou plus larges que lesdites pattes 5, comme illustré aux figures, ou plutôt étroits, plus petits que lesdites pattes 5, lesdits espaces 6 formant alors des rainures (ou fentes), préférentiellement traversantes. Lesdites pattes 5 n'étant de préférence pas reliées directement les unes aux autres, lesdites espaces 6 sont de manière avantageuse traversants. De façon avantageuse, ladite plaque 2 et lesdites pattes 5 attachées à cette dernière forment ensemble un corps déformable d'un seul tenant en forme d'étoile à plusieurs branches, chaque branche étant formée par l'une desdites pattes 2. Alternativement, ladite plaque déformable 2 et lesdites pattes 5 forment un ensemble de structure générale circulaire, chaque patte 5 formant avantageusement une portion périphérique respective d'un secteur circulaire respectif dudit ensemble de structure générale circulaire. Optionnellement, lesdites pattes 5 présentent chacune une forme et une disposition de pétale entourant ladite plaque déformable 2. Le bord périphérique 11 présente avantageusement, dans lesdits espaces 6, des portions libres, lesquelles ne sont donc reliées à aucune structure (autre que la plaque déformable 2, bien entendu, les portions libres faisant partie de ladite plaque déformable 2). Plus précisément, les portions libres peuvent délimiter en partie les espaces 6. En d'autres termes, de manière avantageuse, le bord périphérique 11 comprend, entre chaque paire de pattes 5 adjacentes, une portion libre respective (telle que susmentionnée) qui n'est reliée à aucune structure.

L'invention concerne, selon un second aspect, un procédé de fabrication d'un dispositif d'optique adaptative 1. Le procédé est préférentiellement mis en oeuvre pour fabriquer le dispositif d'optique adaptative 1 décrit ci-dessus et ci-après. La description qui précède, comme celle qui suit, concernant le dispositif d'optique adaptative 1 s'applique donc de préférence également au procédé de fabrication selon l'invention, et inversement, la description qui suit concernant le procédé de fabrication s'applique préférentiellement également au dispositif d'optique adaptative 1 selon l'invention.

Ainsi, selon le second aspect de l'invention, le procédé de fabrication comporte une étape primaire de réalisation ou de fourniture d'une plaque déformable 2 destinée à déformer un front d'onde incident par réfraction et/ou réflexion.

Toujours selon l'invention, le procédé de fabrication comprend en outre au moins une étape secondaire de réalisation de pattes 5 attachées de manière fixe à ladite plaque déformable 5. Par exemple, comme illustré aux figures, le dispositif d'optique adaptative 1 comprend de préférence au moins quatre pattes 5, en particulier entre quatre et vingt pattes 5, par exemple huit pattes 5 comme illustré aux figures 7 à 10, ou selon un autre exemple quatre pattes 5 comme illustré à la figure 13, ou selon un autre exemple encore six pattes 5 comme illustré aux figure 11 et 12, ou selon encore un autre exemple dix-huit pattes 5 comme illustré à la figure 1, ou selon encore un autre exemple onze pattes 5 comme illustré à la figure 14. Le nombre de pattes 5 du dispositif d'optique adaptative 1 peut donc être pair, comme illustré à la plupart des figures, ou impair, comme illustré à la figure 14.

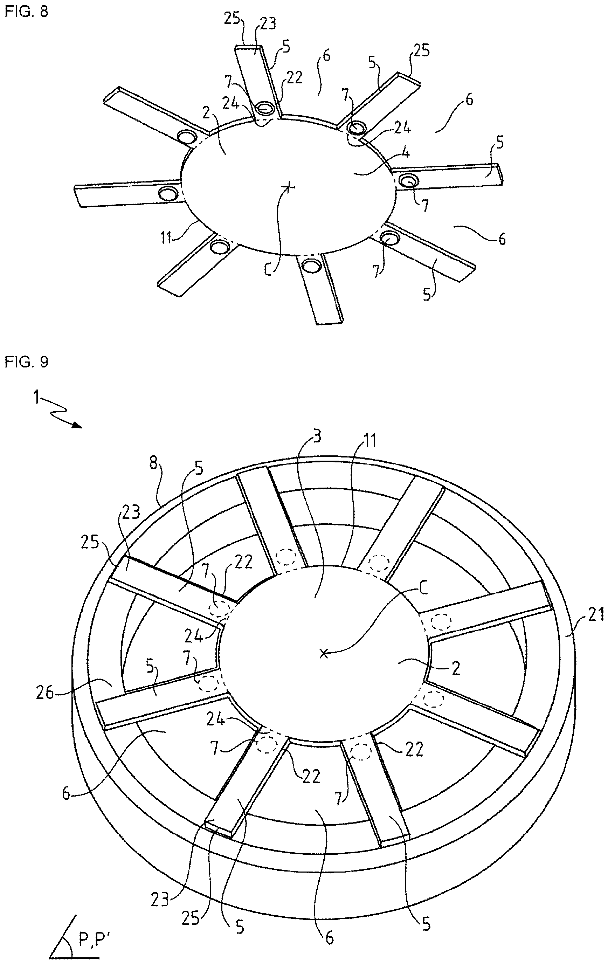

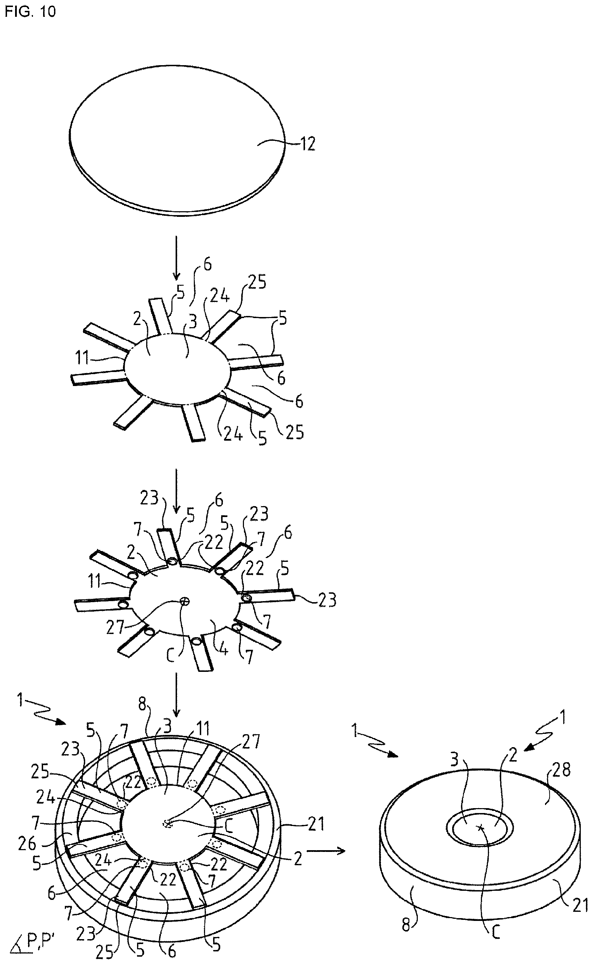

Selon une première alternative, notamment illustrée aux figures1, 7 à 10 et 12 à 14, lesdites pattes 5 sont venues de matière avec ladite plaque déformable 2, lesdites étapes primaire et secondaire de réalisation étant par exemple au moins en partie confondues et comprenant notamment une étape commune de découpe d'une plaque brute 12 pour former lesdites pattes 5 et ladite plaque déformable 2, comme illustré à la figure 10. Dans ce dernier cas de figure, le bord périphérique 11 de la plaque déformable 2 peut en particulier être formé au moins en partie par une limite virtuelle entre le corps de la plaque 2 et la patte 5, comme le représentent les pointillés en bout de pattes 5 aux figures 9, 12 et 13. Selon cet exemple, lesdites pattes 5 sont donc de préférence réalisées à partir d'une même plaque brute 12, par exemple, en pratiquant lesdits espaces 6 dans l'épaisseur de ladite plaque brute 12 afin de former lesdites pattes 5, délimitant par la même occasion une zone centrale qui ne comporte avantageusement aucun espace 6 et qui forme au moins en partie ladite plaque déformable 2. Ainsi, chaque patte 5 est avantageusement séparée des pattes 5 qui lui sont immédiatement voisines par une lumière (ledit espace 6) pratiquée dans l'épaisseur de ladite plaque brute 12. Ladite plaque brute 12 est préférentiellement d'un seul et même tenant. Selon cet exemple, ladite plaque déformable 2 (ou au moins une partie de celle-ci), et/ou lesdites pattes 5 sont préférentiellement formées au moins en partie, et de préférence en totalité, à partir d'une découpe des bords de ladite plaque brute 12, comme illustré par les deux premiers dessins de la figure 10. Un des avantages de l'étape commune de découpe est qu'elle permet de former les pattes 5 et la plaque déformable 2 d'une seule pièce et en une seule opération, garantissant ainsi une résistance mécanique excellente et facilement reproductible.

Selon une seconde alternative, notamment illustrée à la figure 11, lors de ladite étape secondaire de réalisation notamment, lesdites pattes 5 sont rapportées sur ladite plaque déformable 2. Par exemple, ladite étape secondaire de réalisation comprend une étape de solidarisation desdites pattes 5 à ladite plaque déformable 2, par exemple par soudage, collage et/ou brasage. Selon cette alternative, ladite plaque déformable 2 d'une part et lesdites pattes 5 d'autre part sont formées indépendamment l'une des autres. Dans ce dernier cas de figure, le dispositif d'optique adaptative 1 comprend une interface de soudage et/ou de collage entre chaque patte 5 et ladite plaque déformable 2, de préférence au niveau dudit bord périphérique 11 de la plaque déformable 2. Lesdits espaces 6 sont alors simplement prévus en attachant lesdites pattes 2 à ladite plaque déformable 2 à distance les unes des autres, pendant ladite étape secondaire de réalisation. Un des avantages de l'étape de solidarisation est qu'elle permet de former séparément les pattes 5 et la plaque déformable 2, plus faciles par exemple à fabriquer séparément, par moulage, usinage ou tout autre moyen approprié.

De préférence, lors de ladite étape de solidarisation en particulier, au moins une partie (voire la totalité) desdites pattes 5 est solidarisée à ladite plaque déformable 2 :
- sur un bord de ladite plaque déformable 2, par exemple sur ledit bord périphérique 11, comme illustré à la figure 11,
- sur ladite plaque déformable 2, et plus précisément sur ladite face incidente 3, lesdites pattes 5 étant par exemple préalablement en partie plaquées contre ladite face incidente 3, et/ou
- sous ladite plaque déformable 2, et plus précisément sur ladite face cachée 4, lesdites pattes 5 étant par exemple préalablement en partie plaquées contre ladite face cachée 4.

Bien évidemment, il est tout à fait possible par exemple que certaines desdites pattes 5 soient solidarisées sur un bord de ladite plaque déformable 2, tandis que d'autres sont solidarisées sur et/ou sous ladite plaque déformable 2, toutes les combinaisons appropriées étant possibles selon l'utilisation et la conception désirées du dispositif d'optique adaptative 1.

Selon une autre alternative encore, ladite plaque déformable 2 et lesdites pattes 5 sont formées à partir d'un moulage d'un ensemble moulé d'un seul et même tenant comprenant avantageusement ladite plaque déformable 2, lesdites pattes 5 attachées à cette dernière et séparées les unes des autres par lesdites espaces 6. Selon une autre alternative, certaines desdites pattes 5 sont attachées à ladite plaque déformable 2, tandis que d'autres desdites pattes 5 sont venues de matière avec ladite plaque déformable 2, par moulage et/ou découpe notamment. Selon cet exemple, l'étape primaire de réalisation ou de fourniture de la plaque déformable 2 et l'étape secondaire de réalisation de ladite pluralité de pattes 5 sont confondues lors d'une étape de moulage d'un ensemble moulé, avantageusement d'un seul et même tenant, comprenant ladite plaque déformable 2 et lesdites pattes 5. Dans ce dernier exemple, on moule par exemple ledit ensemble moulé avec un matériau en fusion de façon à former la plaque déformable 2 munie de pattes latérales séparées les unes des autres, lesdites pattes latérales formant lesdites pattes 5. Selon encore une autre alternative, ladite plaque déformable 2 est fournie, c'est-à-dire livrée déjà prête à utilisation, lors de ladite étape primaire.

Selon l'invention, le dispositif d'optique adaptative comprend une pluralité d'actionneurs périphériques 7. Toujours selon l'invention, chaque patte 5 comprend une partie mobile 22 reliée à au moins l'un des actionneurs périphériques 7 respectif pour que ce dernier puisse localement déformer ladite patte 5 afin que cette dernière transmette un effort de déformation à ladite plaque déformable 2. Ladite partie mobile 22 est donc de préférence une portion de ladite patte 5 reliée audit actionneur périphérique 7 et rendue mobile par actionnement de ce dernier. Ainsi, chaque partie mobile 5 est préférentiellement reliée à l'un desdits actionneurs périphériques 7. Plus préférentiellement, chaque partie mobile 22 est reliée à un seul actionneur périphérique respectif 7 parmi la pluralité desdits actionneurs périphériques 7. Inversement, de manière avantageuse, chaque actionneur périphérique 7 est relié à une seule desdites parties mobiles 22. Ainsi, chaque actionneur périphérique 7 est de préférence relié à une seule desdites pattes 5.

Avantageusement, chaque actionneur périphérique 7 est ainsi destiné à déplacer ladite partie mobile 22 pour déformer ladite plaque déformable 2, ladite patte 5 transmettant une partie de la déformation reçue par ledit actionneur périphérique 7 à ladite plaque déformable 2 notamment au niveau dudit bord périphérique 11. En d'autres termes, le dispositif d'optique adaptative 1 comprend préférentiellement ladite pluralité d'actionneurs périphériques 7, chacun d'eux étant relié à l'une desdites pattes 5 respective pour la déformer au niveau de ladite partie mobile 22 respective de ladite patte 5. Chaque actionneur périphérique 7 respectif est avantageusement conçu pour exercer une force de pression ou de traction sur la patte 5 correspondante, de façon à provoquer un déplacement et/ou une déformation local(e) de ladite patte 5, au niveau d'une partie de cette patte 5 appelée partie mobile 22. Ce déplacement et/ou cette déformation entraîne l'application d'un effort de déformation sur la plaque déformable 2, de préférence via ledit bord périphérique 11, au niveau duquel est avantageusement reliée ladite patte 5, afin en particulier de déformer le front d'onde incident lorsqu'il se réfléchit sur ladite face incidente 3 et/ou se réfracte via ladite plaque déformable 2. Ceci permet de déformer ladite plaque déformable 2 efficacement pour introduire ou corriger une aberration optique dans le front d'onde réfléchi et/ou réfracté par ladite plaque déformable 2, en déformant au moins localement la courbure de ladite plaque déformable 2 (et donc avantageusement la courbure de sa face incidente 3). Cela a pour effet que ladite courbure varie au moins localement en fonction de la force exercée par ledit actionneur périphérique 7 sur ladite patte 5. Chaque actionneur périphérique 7 est par exemple positionné du même côté de ladite plaque déformable 2, préférentiellement du côté de ladite face cachée 4, ou bien alternativement, du côté de ladite face incidente 3. Les actionneurs périphériques 7 se trouvent de préférence tous du même côté du premier plan moyen P. Alternativement, au moins un des actionneurs périphériques 7 est positionné du côté de la face cachée 4 et au moins un autre des actionneurs périphériques 7 est positionné du côté de la face incidente 3, lesdits (deux) actionneurs périphériques 7 se trouvant ainsi positionnés de part et d'autre du premier plan moyen P. Ainsi, de manière préférentielle, chaque patte 5 présente à la fois une flexibilité suffisante pour être déformée localement par ledit actionneur 7 auquel elle est reliée lorsque ce dernier déplace ladite partie mobile 22, et une tenue mécanique propre suffisante pour influencer la forme de ladite plaque déformable 2 en transmettant l'effort de déformation via ledit bord périphérique 11. Avantageusement, ledit actionneur périphérique 7 peut être de tout type (piézoélectrique, magnétique, en deux parties, mécanique, à vis, etc.), dont ceux qui sont connus dans le domaine technique concerné. Par exemple, ledit actionneur périphérique 7 est relié à ladite patte 5 via un point de colle, définissant ainsi ladite partie mobile 22, et transmet une force de traction ou de pression localement à la surface de ladite partie mobile 22 pour la déplacer et ainsi déformer ladite plaque déformable 2, celle-ci étant solidaire de ladite patte 5.

Selon le premier aspect de l'invention, le dispositif d'optique adaptative 1 comprend en outre un bâti 21 fixe par rapport à ladite plaque déformable 2. En d'autres termes, ledit bâti 21 reste avantageusement immobile lorsque ladite plaque déformable 2 est déformée pour déformer un front d'onde incident de manière contrôlée. Ledit actionneur périphérique 7 peut par exemple être du type magnétique, en deux parties, comme illustré à la figure 2 notamment, une portion mobile de l'actionneur périphérique 7 étant liée à la patte 5 correspondante, tandis qu'une portion immobile de l'actionneur périphérique 7 est liée audit bâti 21. Globalement, on peut considérer que, de manière avantageuse, ledit bâti 21 est fixe également vis-à-vis de l'actionneur périphérique 7, qui lui est mobile (ou tout du moins, sa partie active est mobile).

Selon un exemple particulier, le bord périphérique 11 n'est pas (directement) relié au bâti 21 (mais il l'est indirectement par l'intermédiaire des pattes 5).

Ledit bâti 21 comprend par exemple, comme illustré aux figures 1, 2, 9, 10 et 14, un corps périphérique présentant une forme du même type que celui de la plaque déformable 2, par exemple un corps périphérique circulaire quand la plaque déformable 2 est circulaire, ou encore un corps périphérique rectangulaire lorsque ladite lorsque ladite plaque déformable 2 est rectangulaire, etc. Par exemple, notamment lorsque la plaque déformable 2 présente une forme générale sensiblement circulaire ou elliptique, ledit bâti 21 comprend avantageusement un anneau rigide 8 au milieu duquel ladite plaque déformable 2 munie desdites pattes 5 est positionnée. Ledit anneau 8 (et plus généralement ledit corps périphérique) est en particulier conçu pour faire le tour de ladite plaque déformable 2 et desdites pattes 5. Ledit anneau 8 présente par exemple une forme de cylindre dont la courbe directrice est par exemple un cercle ou un polygone.

Le bâti 21 peut être formé d'un seul tenant, c'est-à-dire un seul bloc, à la manière de l'anneau 8, comme illustré à la plupart des figures (et pour l'anneau les figures 1, 9, 10 notamment), ou alternativement il peut présenter un aspect discontinu, comme illustré à la figure 13, ledit bâti 21 comprenant par exemple des bras 30 (ou encore des vis ou bien des rivets) reliés auxdites pattes 5 et positionnés à distance les uns des autres, lesdits bras 30 étant donc fixes par rapport à ladite plaque déformable 2, et de préférence fixes par rapport auxdits actionneurs périphériques 7. Ledit bâti 21 comprend en outre optionnellement un socle 31, comme illustré à la figure 2, ledit socle 31 étant par exemple relié via une liaison encastrement audit anneau 8, lequel repose sur ledit socle 31. Dans l'actionneur périphérique 7 (ou additionnel 29 comme on le verra par suite) peut en partie reposer contre ledit socle 31 et être relié à ce dernier à translation, c'est-à-dire qu'une partie active de l'actionneur périphérique 7 (ou additionnel 29) est conçue pour pouvoir effectuer un mouvement de translation vis-à-vis dudit socle 31, et plus généralement dudit bâti 21.

Selon l'invention, et comme illustré notamment aux figures, chaque patte 5 comprend en outre une partie fixe 23 respective qui est attachée de manière fixe audit bâti 21 pour être immobilisée relativement à ce dernier. De préférence, ladite partie fixe 23 est immobilisée au moins en translation selon au moins une direction de fixation F relativement audit bâti 21, c'est-à-dire que ladite partie fixe 23 est fixée audit bâti 21 de façon à ne pas pouvoir effectuer de mouvement de translation relativement à ce dernier selon au moins ladite direction de fixation F, et donc à ne pouvoir s'écarter ou se rapprocher de ce dernier selon au moins ladite direction de fixation F, comme illustré notamment à la figure 2. Ladite direction de fixation F est préférentiellement formée par une droite normale à la face incidente 3, c'est-à-dire une droite normale en un point de la surface de ladite plaque déformable 2 du côté de la face incidente 3. Selon un exemple, ladite direction de fixation F est formée, notamment lorsque la plaque déformable 2 est bombée (mais cela vaut également lorsqu'elle est plate), par une droite perpendiculaire à un plan tangent en un point de ladite face incidente 3. Selon un autre exemple, compatible avec le précédent, ladite direction de fixation F est formée, notamment lorsque la plaque déformable 2 est sensiblement plane (mais cela vaut également lorsqu'elle est légèrement bombée), par une droite perpendiculaire audit premier plan moyen d'extension P.

Selon une première alternative, ladite partie fixe 23 ne présente pas de degré de liberté par rapport audit bâti 21, mais selon d'autres alternatives, ladite partie fixe 23 présente un ou plusieurs degrés de liberté par rapport audit bâti 23.

Ladite partie fixe 23 est par exemple :
- en liaison encastrement avec ledit bâti 21, donc sans degré de liberté vis-à-vis de ce dernier, ou
- en liaison pivot avec ledit bâti 21, donc avec au moins un degré de liberté vis-à-vis de ce dernier, ou
- en liaison rotule avec ledit bâti 21, donc avec au moins deux degrés de liberté vis-à-vis de ce dernier.

Ladite partie fixe 23 peut également éventuellement présenter un ou deux degrés de liberté en translation par rapport audit bâti 21 selon une ou deux directions de translation libre, qui sont donc avantageusement différentes de ladite direction de fixation F. Ladite ou lesdites deux directions de translation libre sont donc de préférence non confondues et non parallèles avec ladite direction de fixation F, et sont par exemple perpendiculaires à cette dernière et/ou perpendiculaires entre elles.

Ainsi, ladite partie fixe 23 est assujettie au bâti 21, sans pouvoir s'écarter de ce dernier, et de préférence sans pouvoir se déplacer relativement à ce dernier (encastrement). Il est toutefois alternativement possible, comme exposé ci-avant, que la partie fixe 23 puisse changer d'orientation relativement au bâti 21 (liaison pivot ou rotule) tout en restant attachée à ce dernier en un point fixe. Ainsi, ladite partie fixe 23 de la patte 5 est avantageusement fixée au moins en translation selon un axe localement perpendiculaire à la plaque déformable 2 (correspondant par exemple à la direction de fixation F dans l'exemple illustré à la figure 2), les autres degrés de liberté (deux translations et trois rotations) pouvant être fixés ou non. En d'autres termes, la partie fixe 23 est de préférence immobilisée en translation par rapport au bâti 21 selon au moins ladite direction de fixation F, mais ladite partie fixe 23 peut éventuellement présenter un ou deux degrés de liberté en translation et/ou un, deux ou trois degrés de liberté en rotation par rapport audit bâti 21, selon les alternatives de réalisation, ou encore ne présenter aucun degré de liberté par rapport audit bâti 21 c'est-à-dire être complètement immobilisée relativement à ce dernier.

Ainsi, chaque patte 5 présente de façon avantageuse ladite partie fixe 23 respective, laquelle est reliée fermement audit bâti 21 pour être immobilisée relativement à ce dernier, c'est-à-dire immobilisée relativement à ce dernier au moins en translation. Ladite partie fixe 23 est de préférence attaché avec ledit bâti 21 en contact direct ou quasi-direct avec ce dernier. Avantageusement, ladite partie fixe 23 ne se déplace pas, en translation notamment, par rapport audit bâti 21, lequel est avantageusement fixe, quel que soit la déformation locale de la patte 5 ou plus précisément le déplacement de ladite partie mobile 22, et quelle que soit la déformation de ladite plaque déformable 2. Ceci permet avantageusement d'appliquer des couples de forces à la surface de ladite plaque déformable 2, d'une part en déplaçant chaque patte 5 grâce à l'actionneur périphérique 7 respectif relié à cette dernière au niveau de ladite partie mobile 22, et d'autre part en exerçant une « *force de rappel* » ou une « *force de maintien* » sur ladite patte 5 grâce à sa partie fixe 23 fixée audit bâti 21, sans effort démesuré de la part dudit actionneur périphérique 7, la fixation de chacune desdites parties fixes 23 respectives des pattes 5 audit bâti 21 assurant le contrôle de la déformation de ladite plaque déformable 2. La combinaison, par patte 5 considérée, de la partie fixe 23 et de la partie mobile 22 va donc avantageusement permettre à la fois de contrôler avec précision l'amplitude de déformation de la plaque déformable 2 et de rationaliser le nombre d'actionneurs périphériques 7 et/ou leur puissance, ainsi que le nombre de pattes 5, grâce à l'effet de levier et/ou le couple créé d'une part grâce à la force de déformation exercée par l'actionneur périphérique 7 et d'autre part grâce à la force de maintien ou rappel (constante et sans besoin de calibrage) de la partie fixe 23. Par exemple, le nombre d'actionneurs (périphériques 7 et/ou additionnels 29 qui seront décrits ci-après) correspond exactement ou approximativement (+/- 2 par exemple) au nombre de modes ou profils de déformation possibles de ladite plaque déformable 2.

Dans le cas où le bâti 21 est discontinu, lesdits bras 30 sont par exemple chacun fixé à l'une desdites pattes 5 respective au niveau de ladite partie fixe 23 respective, comme illustré à la figure 13. Dans le cas où le bâti 21 est formé d'un seul tenant, ledit bâti 21, par exemple formé par ledit anneau 8, est fixé auxdites pattes 5 via lesdites parties fixes 23 respectives de ces dernières, comme illustré aux figures 1, 9 et 10 notamment. Dans tous les cas, ledit bâti 21 n'est de préférence pas en contact direct avec ladite plaque déformable 2.

Selon l'invention, le procédé de fabrication comprend en outre au moins :
- une étape d'équipement, lors de laquelle une partie mobile 22 respective de chaque patte 5 est reliée à au moins un actionneur 7 respectif, de façon que ce dernier puisse déformer localement ladite patte 5 afin que cette dernière transmette un effort de déformation à ladite plaque déformable 2,
- une étape de fixation, lors de laquelle une partie fixe 23 respective de chaque patte 2 est attachée de manière fixe à un bâti 21 fixe par rapport à ladite plaque déformable 2 pour être immobilisée relativement à ce dernier.

En d'autres termes, lors de ladite étape d'équipement, on fixe avantageusement à chaque patte 5 un actionneur périphérique 7 respectif, par exemple avec de la colle, une soudure, une brasure, ou tout autre moyen de fixation approprié. Sur les figures 3 à 6, chaque actionneur périphérique 7, non représenté sur ces figures, peut par exemple être situé en dessous de la patte 5 correspondante.

Préférentiellement, lors de ladite étape d'équipement en particulier, les actionneurs périphériques 7 ne sont pas directement reliés à la plaque déformable 2, et notamment au bord périphérique 11 de cette dernière. Au contraire, afin notamment de déformer ladite plaque déformable 2 ainsi que ladite face incidente 3, lesdits actionneurs périphériques 7 sont avantageusement positionnés de manière à agir sur la plaque déformable 2 uniquement indirectement, par l'intermédiaire desdites pattes 5. Ces dernières sont donc de préférence distinctes desdites actionneurs périphériques 7. L'utilisation des pattes 5 dans le dispositif d'optique adaptative 1 de l'invention permet une excellente précision de déformation de ladite plaque déformable 2, et donc une précision accrue de correction ou d'introduction d'aberrations optiques dans le front d'onde incident, bien qu'elle n'exclue pas, en tant que telle, l'utilisation d'actionneurs additionnels 29 liés directement au bord périphérique 11 de la plaque déformable 2.

Par exemple, lors de ladite étape de fixation, lesdites pattes 5 sont rivetées, vissées collées, brasées, et/ou soudées audit bâti 21. Selon cet exemple pendant ladite étape de fixation, une partie de chaque patte 5 est, par exemple avec au moins un rivet, au moins une vis, de la colle, une soudure, un brasage, ou tout autre moyen d'attachement approprié, attachée avec ledit bâti 21, de façon à former la partie fixe 23 de la patte 5 correspondante. De préférence, l'étape d'équipement comprend également une étape de liaison d'une portion de chaque actionneur périphérique 7 (et même de chaque actionneur additionnel 29, y compris central 27, décrit ci-après) audit bâti 21, par exemple par collage, vissage, rivetage, clipsage, soudage ou brasage, par exemple par l'intermédiaire d'une portion dudit actionneur périphérique 7.

Selon un autre exemple, le procédé de fabrication comprend en outre une seconde étape de découpe de ladite plaque brute 12 pour former ledit bâti 21, ou au moins une partie du bâti 21, ladite seconde étape de découpe étant alors avantageusement, au moins en partie, confondue avec ladite étape commune de découpe, de manière à ce que ledit bâti 21 soit avantageusement venu de matière avec lesdites pattes 5 (et ladite plaque déformable 2), et formé sensiblement en même temps qu'elles à partir de ladite plaque brute 12. Alternativement, le procédé de fabrication comprend une étape de fourniture dudit bâti 21 déjà prêt au montage.

Pour chacune desdites pattes 5 considérée, ladite partie fixe 23 peut par exemple comprendre une portion de surface fixée audit bâti 21 de ladite patte 5. Selon un autre exemple, ladite partie fixe 23 peut être sensiblement ponctuelle, c'est-à-dire rattachée de manière très localisée audit bâti 21 et notamment via un ou plusieurs points de fixation par exemple formés chacun par une vis ou un rivet, en particulier lors de ladite étape de fixation.

De manière avantageuse, lors de ladite étape d'équipement, chaque patte 5 n'est préférentiellement reliée qu'à un seul actionneur périphérique 7 respectif. Plus précisément, lors de ladite étape d'équipement, chaque partie mobile 22 n'est de préférence reliée qu'à un seul actionneur périphérique 7 respectif. Ainsi, un seul actionneur périphérique 7 par patte 5 suffit avantageusement pour déplacer celle-ci, et générer par exemple une torsion suffisante à la périphérie de la plaque déformable 2 pour utiliser le dispositif d'optique adaptative 1 dans un système d'optique adaptative. Préférentiellement, la conception du dispositif d'optique adaptative 1 selon l'invention permet de n'avoir besoin que d'un seul actionneur périphérique 7 par patte 5, tandis que la combinaison de ladite partie mobile 22 et de ladite partie fixe 23 permet à chaque patte 5 d'exercer au moins un mode de déformation de ladite plaque déformable 2 (et donc du front d'onde) avec une large variété d'amplitude, rationalisant non seulement le nombre d'actionneurs et/ou leur puissance et/ou leur dimensionnement par rapport aux configurations de l'art antérieur, mais également le nombre de pattes, ce qui rend le dispositif d'optique adaptative 1 de l'invention particulièrement facile à régler et à utiliser, le procédé de fabrication étant ainsi aisé à réaliser. La mise en oeuvre du dispositif d'optique adaptative 1 est particulièrement simple puisque lesdites parties fixes 23 représentent des parties « *passive* » (en tous cas en translation, puisque dans certains cas une rotation reste possible) desdites pattes 5 qu'il suffit de fixer audit bâti 21, les parties mobiles 22 représentant les seules parties « *actives* » desdites pattes 5. Bien évidemment lesdites parties fixes 23 ne sont de préférence pas reliées directement à un actionneur 7, puisqu'elles ne sont avantageusement pas mobiles en translation par rapport audit bâti 21. Cette configuration astucieuse permet ainsi de limiter le coût de fabrication et la complexité du dispositif d'optique adaptative 1 de l'invention par rapport aux configurations de l'art antérieur. Alternativement, chaque patte 5 est reliée à plusieurs actionneurs périphériques 7, dont les réglages et fonctionnement sont simples à mettre en oeuvre avec une précision satisfaisante, en raison du maintien apporté par lesdites parties fixes 23. Selon cette dernière alternative, lors de ladite étape de d'équipement, chaque patte 5 est reliée à plusieurs actionneurs périphériques 7 respectifs, par exemple à deux actionneurs périphériques 7, comme illustré à la figure 14, lesdits deux actionneurs périphériques 7 étant positionnés à distance l'un de l'autre et reliés chacun à une partie mobile 22 différente de ladite patte 5. Cette dernière alternative présente plusieurs des mêmes avantages que précédemment à savoir une large variété d'amplitude de déformation possible de ladite plaque déformable 2, ainsi que des actionneurs périphériques 7 dont la puissance a été dimensionnée au plus juste, tout en présentant un nombre important de profils de déformation possibles. Il est également possible que certaines desdites pattes 5 soient reliées à un seul actionneur périphérique 7 comme susmentionné, tandis que d'autres desdites pattes sont reliées à plusieurs actionneurs périphériques 7, comme mentionné précédemment. Bien évidemment, le procédé de fabrication comprend avantageusement une étape de fourniture ou de fabrication desdits actionneurs périphériques 7.

Selon un exemple de réalisation, lesdites parties fixes 23 sont toutes immobiles les unes par rapport aux autres, en particulier dans le cas de liaison encastrement bâti 21 / parties fixes 23.

Selon un exemple particulier, les actionneurs périphériques 7 respectifs de deux pattes 5 correspondantes différentes sont conçus pour être actionnés en fonction l'un de l'autre, de manière conjuguée, afin de déformer de manière contrôlée ladite plaque déformable 2, par exemple en exerçant un couple à ladite plaque déformable 2, de préférence par l'intermédiaire de son bord périphérique 11. Par ailleurs, ledit couple n'a pas besoin d'être particulièrement élevé, lesdites parties fixes 23 permettant de contrôler avantageusement avec précision et sans effort important ladite déformation, notamment grâce à l'effet de levier induit par lesdites parties fixes 23.

De préférence, lesdites pattes 5 sont souples, de manière à pouvoir se déformer localement au niveau de ladite partie mobile 22 lorsque l'actionneur périphérique 7 respectif auquel la patte 5 est reliée déplace et/ou déforme sa partie mobile 22, par exemple en la poussant ou la tirant. Ainsi, ladite patte 5 est avantageusement suffisamment flexible pour se plier de manière élastique lorsqu'elle est soumise à une force de traction ou de pression par ledit actionneur périphérique 7 respectif, mais suffisamment rigide ou résiliente pour retrouver sa forme et sa position d'origine lorsque l'actionneur périphérique 7 n'exerce plus aucune force, cette caractéristique de ladite patte 5 étant renforcée par la présence de ladite partie fixe 23 (qui exerce une force de *« rappel »* ou de *« maintien »* de ladite patte 5). Une telle configuration est particulièrement avantageuse pour étalonner facilement et avec précision le dispositif d'optique adaptatif 1, tout en garantissant à ce dernier une excellente durée de fonctionnement.

Le dispositif d'optique adaptative 1 de l'invention permet avantageusement de mettre en oeuvre une plaque déformable 2 qui est déformable et mince voire très mince, les efforts demandés aux actionneurs périphériques 7 pour déformer de manière efficace et contrôlée ladite plaque déformable 2 étant significativement réduits par rapport à un dispositif d'optique adaptative de l'art antérieur. Une telle configuration permet ainsi d'utiliser avantageusement des actionneurs périphériques de puissance (et donc de coût) limitée, ce qui, en combinaison avec le nombre rationalisé d'actionneurs périphériques 7 (puisque les parties fixes 23 sont attachées audit bâti 21 plutôt qu'à des actionneurs) et une plaque déformable 2 mince, autorise une miniaturisation et un allègement significatifs du dispositif d'optique adaptative 1, pour un résultat au moins tout aussi efficace que les dispositif d'optique adaptative de l'art antérieur mettant en oeuvre des conceptions plus complexes avec plus d'actionneurs et/ou des actionneurs plus puissants.

De façon avantageuse, comme illustré aux figures, chaque patte 5 s'étend entre une extrémité proximale 24 respective attachée à ladite plaque 2 et une extrémité distale 25 respective à l'opposé de ladite extrémité proximale 24. L'extrémité distale 25 est de préférence la portion ou l'extrémité de la patte 5 considérée la plus éloignée de la plaque déformable 2, tandis que l'extrémité proximale 24 est préférentiellement la portion ou l'extrémité de la patte 5 considérée la plus proche de la plaque déformable 2.

Selon une alternative, ladite partie fixe 23 est située plus près de ladite extrémité distale 25 que de ladite extrémité proximale 24. Selon un mode de réalisation particulier de cette alternative, illustré notamment aux figures 1, 2, 9 et 10, ladite partie fixe 23 comprend ladite extrémité distale 25, laquelle est donc attachée de manière fixe audit bâti 21. Par exemple, comme illustré à la figure 1, ladite partie fixe 23 comprend seulement ladite extrémité distale 25 de ladite patte 5 correspondante, ladite extrémité distale 25 étant attachée audit bâti 21 (ou plus précisément audit anneau 8, comme illustré à la figure 1), de préférence par rivetage, vissage, collage, soudage, brasage, etc. uniquement via ladite extrémité distale 25. Selon un autre exemple, notamment illustré aux figures 2, 9 et 10, ledit anneau rigide 8 présente un épaulement interne 26 sur lequel lesdites pattes 2 sont fixées, tandis que ladite partie fixe 23 comprend avantageusement, en plus de ladite extrémité distale 25, une portion de surface de ladite patte 5 correspondante, ladite portion de surface étant par exemple attachée (par exemple rivetée, vissée, collée, brasée ou soudée) audit anneau 8 au niveau dudit épaulement 26, et plus généralement audit bâti 21. Ledit épaulement interne 26 peut par exemple être formé par un alésage pratiqué dans l'épaisseur dudit anneau 8, et permet de positionner facilement la plaque déformable 2 munie desdites pattes 5, ces dernières venant en butée contre ledit épaulement interne 26 via leurs parties fixes 23 respectives. Il est également possible, selon une alternative, que ladite partie fixe 23 soit positionnée entre lesdites extrémités distale 25 et proximale 24, ladite extrémité distale 25 pouvant éventuellement être libre c'est-à-dire non-reliée audit bâti 21. Selon un mode de réalisation particulier, non illustré ici, la partie fixe 23 est située plus près de ladite extrémité proximale 24 que de ladite extrémité distale 25. Selon encore un autre mode de réalisation particulier, non illustré ici, la partie fixe 23 est située à équidistance entre lesdites extrémités proximale 24 et distale 25.

De préférence, ladite partie mobile 22 est positionnée entre lesdites extrémités distale 25 et proximale 24, comme illustré aux figures. Ladite partie mobile 22 est préférentiellement formée par la portion de la patte 5 correspondante au niveau de laquelle l'actionneur périphérique 7 correspondant est associé, par exemple via un point de colle comme décrit précédemment. Ladite partie mobile 22 peut alternativement être positionnée au moins en partie au niveau de ladite extrémité distale 25 et/ou au niveau de ladite extrémité proximale 24.

Selon un mode particulier de réalisation, ladite partie mobile 22 est positionnée plus près de ladite extrémité proximale 24 que de ladite extrémité distale 25, comme illustré aux figures 8 à 10 et 13. En d'autres termes, ladite partie mobile 22, ainsi que ledit actionneur périphérique 7, sont selon cet exemple positionnés plus près de la plaque déformable 2 que de ladite extrémité distale 25. Cette configuration est par exemple avantageuse dans le cas où la partie fixe 23 inclut ladite extrémité distale 25, puisque cela permet notamment de mettre à une certaine distance lesdites parties fixe 23 et mobile 22 tout en rapprochant ladite partie mobile 22 de la plaque déformable 2, faisant ainsi supporter des contraintes relativement faibles auxdites pattes 5 lorsque l'actionneur périphérique 7 correspondant fonctionne, tout en permettant une déformation importante de ladite plaque déformable 2, et ce sans que ledit actionneur périphérique 7 ait à exercer un effort important.

Alternativement, ladite partie mobile 22 est positionnée à équidistance entre lesdites extrémités proximale 24 et distale 25 ; l'avantage de cette dernière configuration est bien évidemment sa simplicité de réalisation, mais peut découler d'autres paramètres (forme des pattes 5, déformation de plaque déformable 2 voulue, etc.).

Selon encore une autre alternative, ladite partie mobile 22 est positionnée plus près de ladite extrémité distale 25 que de ladite extrémité proximale 24. Cette dernière configuration peut être avantageuse dans certains cas, par exemple lorsque lesdites pattes 5 présentent une forme particulière (par exemple trapézoïdale comme décrit ci-après), en particulier plus facile à déformer vers ladite extrémité distale 25 que ladite extrémité proximale 24, comme à la figure 12 et/ou lorsque le dispositif d'optique adaptative 1 est relativement encombré et/ou que les pattes 5 sont très courtes, comme à la figure 1, ou encore selon la déformation de la plaque déformable 2 voulue.

Ainsi, la forme desdites pattes 5 peut avoir une certaine importance dans la déformation de ladite plaque déformable 2. Par exemple, chaque patte 5 est sensiblement plate et présente une forme globalement rectangulaire, comme à la plupart des figures, ou trapézoïdale, comme à la figure 12, la grande base du trapèze formant par exemple l'extrémité proximale 24, au niveau du bord périphérique 11, et la petite base du trapèze formant par exemple l'extrémité distale 25, à l'écart de la plaque déformable 2. Les figures 7 à 10 illustrent notamment des pattes 5 sensiblement rectangulaires, le bord périphérique 11 de la plaque déformable 2 formant un cercle, tandis que la figure 12 illustre des pattes 5 trapézoïdales avec une petite base bien plus petite que la grande base, le bord périphérique 11 de la plaque déformable 2 formant un hexagone, et la figure 13 illustre quant à elle des pattes 5 légèrement trapézoïdales avec une petite base d'une taille relativement proche à celle de la grande base, le bord périphérique 11 de la plaque déformable 2 étant ici à nouveau un cercle.

Lesdites parties fixe 23 et mobile 22, faisant partie d'une même desdites pattes 5, sont de préférence distinctes l'une de l'autre, et situées à distance l'une de l'autre, le long de ladite patte 5.

Avantageusement, et comme représenté aux figures, au moins l'une desdites pattes 5 (ou plusieurs, voire la totalité d'entre elles) s'étend(ent) sensiblement, au repos, selon un second plan moyen d'extension P' (respectif - dans le cas où cela concerne plusieurs, voire la totalité desdites pattes 5). Ainsi, au repos, c'est-à-dire de préférence en l'absence de sollicitation mécanique de déformation exercée sur ladite patte 5, par exemple par un actionneur, celle-ci présente avantageusement une étendue principalement inscrite dans ledit second plan moyen d'extension P' (ou au voisinage immédiat de ce dernier, ou encore de part et d'autre de ce dernier), celui-ci coupant préférentiellement ladite patte 5 dans la majorité, voire la quasi-totalité, de son épaisseur. Selon un premier exemple illustré à la plupart des figures, au moins l'une desdites pattes 5 (ou plusieurs, voire la totalité d'entre elles) présente(nt), au repos, une surface sensiblement plane. Selon un second exemple, illustré à la figure 6, non exclusif de l'exemple, au moins une desdites pattes 5 (ou plusieurs, voire la totalité d'entre elles) présente(nt), au repos, une courbure qui est de préférence continue. Alternativement, au moins l'une desdites pattes 5 (ou plusieurs, voire la totalité d'entre elles) présente(nt), au repos, une partie primaire présentant une surface sensiblement plane et une partie secondaire présentant une courbure de préférence continue.

Selon un mode de réalisation particulier, et comme illustré aux figures 1, 2, et 7 à 14, au moins l'une ou plusieurs desdites pattes 5 (voire la totalité d'entre elles) s'étendent sensiblement, au repos, dans le prolongement de ladite plaque déformable 2, de préférence dans le prolongement dudit premier plan moyen d'extension P. Ledit premier plan moyen d'extension P est ainsi avantageusement parallèle audit, ou confondu avec, ledit second plan moyen d'extension P' (respectif). Ainsi, au repos, c'est-à-dire de préférence en l'absence de sollicitation mécanique de déformation exercée sur ladite plaque déformable 2, cette dernière et une, plusieurs ou la totalité des pattes 5 dans son prolongement s'étendent avantageusement selon un même profil continu et régulier, avantageusement droit, mais qui peut alternativement être en escalier, ladite patte 5 considérée et ladite plaque déformable 2 formant alors respectivement une première et une seconde marches parallèles d'un escalier, lesdites deux marches étant à différentes altitudes, lesdits premier P et second P' plans moyens étant alors parallèles et non confondus. Par exemple, au moins l'une desdites pattes 5 (ou plusieurs, voire la totalité d'entre elles) fait saillie vers l'extérieur de ladite plaque déformable 2 à partir du bord périphérique 11 de cette dernière. Ainsi, lesdites pattes 5 sont préférentiellement disposées latéralement relativement à ladite plaque déformable 2, dans la continuité de cette dernière.

Selon un autre mode de réalisation particulier, et comme illustré aux figures 3 à 6, ledit second plan moyen d'extension P' (respectif) est sécant avec ledit premier plan moyen d'extension P. Ainsi, au repos, c'est-à-dire de préférence en l'absence de sollicitation mécanique de déformation exercée sur ladite plaque déformable 2, cette dernière et lesdites pattes 5 dans son prolongement s'étendent avantageusement selon un même profil continu présentant au moins un angle, ledit angle séparant ladite plaque déformable 2 de la patte 5 considérée. Selon cet exemple, lesdits premier P et second P' plans moyens d'extension ne sont donc pas confondus. Ainsi, selon cet exemple, au moins l'une desdites pattes 5 s'étend sensiblement, au repos, à l'oblique ou perpendiculairement par rapport à ladite plaque déformable 2.

Plus avantageusement, ledit second plan moyen d'extension P' forme avec ledit premier plan moyen d'extension P un angle dièdre β. Comme illustré à la figure 5, lesdits premier P et second P' plans moyens d'extension sont par exemple orthogonaux. En d'autres termes, selon cet exemple, ledit premier plan moyen d'extension P coupe transversalement ledit second plan moyen d'extension P', ledit angle dièdre β étant avantageusement perpendiculaire, c'est-à-dire sensiblement égal à 90°. Comme illustré aux figures 3, 4 et 6, lesdits premier P et second P' plans moyens d'extension sont, selon un autre exemple, obliques l'un par rapport à l'autre. Ledit angle dièdre β peut être aigu ou obtus, c'est-à-dire respectivement compris entre 0° et 90° exclus ou entre 90° et 180° exclus. Plus préférentiellement, ledit angle dièdre β est compris entre 30° et 60° ou entre 120° et 150°. Dans l'exemple illustré à la figure 6, où lesdites pattes 5 présentent une courbure, le second plan moyen d'extension P' est de préférence à l'oblique par rapport audit premier plan moyen P et sécant avec ce dernier, et l'angle dièdre β entre ces deux plans est avantageusement obtus. Il est avantageusement possible de réaliser toute combinaison utile de différentes pattes 5 s'étendant chacune selon un second plan moyen d'extension P' respectif, confondu, parallèle ou sécant avec ledit premier plan moyen d'extension P, lesdits seconds plans moyens P' respectifs étant eux-mêmes confondus, parallèles ou sécants les uns par rapport aux autres. De préférence, ladite étape secondaire de réalisation comprend une étape de pliage d'au moins l'une desdites pattes 5, de façon que cette dernière s'étende sensiblement à l'oblique ou perpendiculairement par rapport à ladite plaque déformable 2. Par exemple, ladite patte 5 s'étend selon un second plan moyen d'extension P' et ladite plaque déformable 2 s'étend sensiblement, au repos, selon un premier plan moyen d'extension P, ladite étape de pliage étant mise en oeuvre pour que lesdits premier P et second P' plans moyens d'extension soient sécants. Plus préférentiellement, ledit pliage est non réversible, c'est-à-dire avantageusement pratiqué afin de plier ladite patte 5 de manière non élastique. Les figures 4 à 6 illustrent des exemples de pattes 5 attachées à la plaque déformable 2 résultant de cette dernière étape, où les pattes 5 respectives ont été pliées selon un angle dièdre β formé entre les premier P et second P' plans moyens d'extension, ledit angle dièdre β des figures 3, 4, 5, et 6 étant respectivement obtus, aigu, perpendiculaire et encore obtus.

De préférence, et comme illustré aux figures, ladite plaque déformable 2 et lesdites pattes 5 présentent respectivement une première et une deuxième épaisseur, lesdites première et deuxième épaisseurs étant par exemple sensiblement identiques. Une telle configuration est parfois avantageuse pour standardiser la fabrication de ladite plaque déformable 2 et/ou desdites pattes 5. Cela est particulièrement avantageux, car grâce au dispositif d'optique adaptative 1 de l'invention, il est possible de diminuer les risques d'erreur lors de la réalisation du dispositif d'optique adaptative 1 tout en utilisant une plaque déformable 2 mince voire très mince (et donc plus facile à déformer mais relativement fragile) et qui peut être d'un seul tenant. Toutefois, l'invention n'est pas limitée à ce mode de réalisation préférentiel, et il est par exemple envisageable que lesdites épaisseurs diffèrent, avec par exemple ladite deuxième épaisseur supérieure à ladite première épaisseur, ou inversement.

Avantageusement, le dispositif d'optique adaptative 1 comprend également au moins un actionneur additionnel 29 conçu pour appliquer une force directement sur ladite plaque déformable 2 pour la déformer, et non sur l'une desdites pattes 5. Ainsi, cet actionneur additionnel 29 permet, de manière avantageuse, de compléter ou d'affiner localement l'action globale des actionneurs périphériques 7. Ledit actionneur additionnel 29 est notamment conçu pour appliquer des efforts ponctuels ou quasi-ponctuels à ladite plaque déformable 2, ou alternativement pour appliquer des efforts répartis sur une surface de ladite plaque déformable 2. Par exemple, ledit actionneur additionnel 29 est formé par au moins un film piézoélectrique prévu sur une surface de la plaque déformable 2 (et en particulier sur la face cachée 4) et qui est destiné à produire un effet bilame courbant au moins localement la plaque déformable 2 lorsqu'on applique un courant électrique audit film piézoélectrique.

Le dispositif d'optique adaptative 1 peut comprendre en outre au moins un actionneur central 27, comme illustré aux figures 10 et 12, conçu pour appliquer une force (de préférence quasi-ponctuelle) audit centre géométrique C, ledit actionneur central 27 formant donc ledit ou l'un desdits actionneurs additionnels 29. Ledit ou lesdits actionneurs additionnels 29 peuvent également être reliés à la plaque 2 ailleurs qu'au centre géométrique C, comme l'illustrent l'exemple de la figure 13 où le dispositif d'optique adaptative 1 comprend notamment quatre actionneurs additionnels 29 disposés autour et à distance du centre géométrique C de la plaque déformable 2, du côté de ladite face cachée 4, ainsi que l'exemple de la figure 14, où le dispositif d'optique adaptative 1 comprend notamment deux actionneurs additionnels 29 disposés de part et d'autre et à distance du centre géométrique C de la plaque déformable 2, du côté de ladite face cachée 4.

Ledit actionneur additionnel 29 (par exemple central 27) est avantageusement conçu pour exercer une pression ou une traction (par exemple centrale) sur ladite plaque déformable 2 du côté et par l'intermédiaire de ladite face cachée 4. De façon avantageuse, ladite pression ou traction (par exemple centrale) déforme ladite plaque déformable 2 pour introduire ou corriger une aberration, par exemple une aberration ellipsoïdale, dans le front d'onde incident lorsque celui-ci est réfléchi par ladite face incidente 3 et/ou réfracté via ladite plaque déformable 2. De préférence, ladite aberration varie au moins localement au niveau de la plaque déformable 2 (par exemple au niveau du centre géométrique C) en fonction de la force exercée par ledit actionneur additionnel 29 (par exemple central 27) sur ladite face cachée 4. Bien évidemment, ledit dispositif d'optique adaptative 1 peut comprendre plusieurs actionneurs additionnels 29 (centraux ou non) en combinaison, en particulier tels que décrits ci-avant et/ou ci-après, de même nature ou de natures différentes. Avantageusement, ledit actionneur additionnel 29 (par exemple central 27) peut être de tout type (piézoélectrique, magnétique, en deux parties, mécanique, à vis, etc.), dont ceux qui sont connus dans le domaine technique concerné. Par exemple, ledit actionneur additionnel 29 (par exemple central 27) est relié à ladite face cachée 4 via un point de colle (par exemple au niveau dudit centre géométrique C), et transmet une force de traction ou de pression localement à la surface de ladite face cachée 4 pour déformer ladite plaque déformable 2. Plus avantageusement encore, ladite force s'exerce selon une direction sensiblement perpendiculaire localement à ladite face incidente 3.

Chaque actionneur périphérique 7 et/ou additionnel 29 (par exemple central 27) présente préférentiellement une première portion solidaire (c'est-à-dire attachée de façon fixe) de ladite patte 5 correspondante et une seconde portion solidaire dudit bâti 21, lesdites première et seconde portions pouvant elles-mêmes être reliée l'une de l'autre à translation, exemple dans le cas d'un actionneur périphérique 7 et/ou additionnel 29 de type piézoélectrique (de préférence à effort quasi-ponctuel dans ce cas), ou non solidaires l'une de l'autre par exemple dans le cas d'un actionneur périphérique 7 et/ou additionnel 29 de type magnétique. Par exemple, lors de ladite étape d'équipement en particulier, ladite première portion est collée à ladite patte 5 correspondante par l'intermédiaire d'une goutte de colle, et présente avantageusement une tête, par exemple de forme sensiblement cylindrique, conique ou tronconique, rentrant dans ladite goutte sans entrer en contact avec ladite patte 5 correspondante, ladite goutte de colle formant ainsi une liaison rotule entre ladite tête et ladite patte 5 correspondante. Ceci permet notamment d'éviter que l'actionneur périphérique 7 et/ou additionnel 29 (par exemple central 27) considéré entraîne une déformation de la surface de la plaque déformable 2 même en l'absence de sollicitation mécanique de déformation dudit actionneur, du seul fait de sa liaison avec ladite plaque déformable 2 (par exemple dans le cas où l'actionneur considéré est un actionneur central 27) ou avec une patte 5 (par exemple dans le cas où l'actionneur considéré est un actionneur périphérique 7).

La figure 10 présente un exemple de fabrication de ladite plaque déformable 2 et desdites pattes 5 attachées à cette dernière, lesdites pattes 5 étant même, dans l'exemple de cette figure, venues de matière avec ladite plaque déformable 2 et formées au cours de ladite étape commune de découpe de ladite plaque brute 12. Les actionneurs périphériques 7 sont ensuite reliés chacun à l'une desdites pattes 5 respectives, du côté de la face cachée 4, de manière à ce que chaque patte 5 soit pourvue d'au moins un actionneur périphérique 7, et définissant ainsi une partie mobile 22 de la patte 5 considérée reliée audit actionneur périphérique 7. Un actionneur additionnel 29, par exemple un actionneur central 27, est également placé au niveau du centre géométrique Ç de la plaque déformable 2, du côté de la face cachée 4 aussi. Enfin, la plaque déformable 2 et les pattes 5 qui lui sont attachées sont placées au centre de l'anneau 8, les extrémités distales 25 des pattes 5 se logeant dans l'épaulement 26 de l'anneau 8, l'épaulement 26 venant en butée contre les pattes 5 qui sont alors reliées, par rivetage, vissage, brasage, collage ou soudage, à l'anneau 8, définissant ainsi les parties fixes 23 puisque l'anneau 8 forme ici au moins une partie du bâti 21. Le dispositif d'optique adaptative 1 inclut également optionnellement un couvercle 28 présentant une lumière, par exemple en son centre, le couvercle étant conçu pour délimiter la face incidente 3 de la plaque déformable 2, et plus précisément la surface optique de la face incidente 3, c'est-à-dire la partie active optiquement de la face incidente 3. Le couvercle 28 vient dans les exemples des figures 9, 10 et 15 se placer sur la plaque déformable 2 du côté de la face incidente 3, de manière à se loger dans ledit épaulement 26. La figure 11 présente partiellement une alternative de fabrication, dans laquelle seule l'étape secondaire de réalisation est représentée, où lesdites pattes 5 sont formées distinctement de ladite plaque déformable 2 puis attachées à cette dernière.

Un exemple d'utilisation du dispositif d'optique adaptative 1 précédemment décrit va maintenant être exposé. Selon cet exemple, on désire corriger une aberration optique constatée dans le front d'onde à l'aide du dispositif d'optique adaptative, qui peut être un miroir déformable ou une lentille adaptative. On va donc positionner le dispositif d'optique adaptative 1 sur le trajet du front d'onde, de façon à ce que la face incidente 3 de la plaque déformable 2 intercepte ledit front d'onde pour le déformer, et en particulier le réfléchir et/ou le réfracter. Cette mise en interférence seule ne suffit généralement pas à corriger l'aberration optique constatée : il est nécessaire de modifier la déformation (réflexion et/ou réfraction) provoquée par la face incidente 3 et/ou la plaque déformable 2 pour modifier de façon satisfaisante le front d'onde. Dans ce but, on va chercher à déformer la plaque déformable 2 dont fait partie la face incidente 3 afin que celle-ci se courbe (ou s'aplanisse) de manière déterminée, précise et souvent localisée, en particulier afin de présenter un angle de courbure déterminé et constant. On va ainsi activer au moins un actionneur périphérique 7 afin qu'il déplace (et optionnellement, déforme) de manière contrôlée la partie mobile 22 d'une desdites patte 5 à laquelle il est relié en la poussant ou la tirant, c'est-à-dire en la déplaçant vers la face incidente 3 ou vers la face cachée 4 opposée du dispositif d'optique adaptative 1. La partie mobile 22 déplacée entraîne une légère déformation de la plaque déformable 2 avec laquelle elle est solidaire, par l'intermédiaire du bord périphérique 11 reliant la plaque déformable 2 et la patte 5. La déformation de la plaque déformable 2 est limitée et parfaitement contrôlée grâce à la présence de la partie fixe 23 de la patte 5, la partie fixe 23 étant reliée fixement au bâti 21 et restant donc immobile vis-à-vis de ce dernier, au moins en translation, pendant et après le déplacement de la partie mobile 22. On peut activer plusieurs actionneurs périphériques 7, voire au moins un actionneur additionnel 29 qui est par exemple un actionneur central 27, successivement ou concomitamment, afin de déformer de manière satisfaisante la plaque déformable 2 pour que sa face incidente 3 reçoive le front d'onde incident selon un angle et une déformation de plaque déformable 2 déterminés, de manière à corriger l'aberration optique. La figure 15 présente ainsi une configuration dans laquelle une ou plusieurs parties mobiles 22 ont été déplacées par leurs actionneurs périphériques 7 respectifs (cachés par le couvercle 28 sur la figure), les parties fixes 23 respectives n'ayant pas été déplacées du tout car reliées audit bâti 21.

Le dispositif d'optique adaptative 1 peut ensuite être mis en position de non-utilisation, les pattes 5 déplacées étant remises dans leur position de départ dans le prolongement de la plaque déformable 2, notamment grâce à leur comportement élastique, la désactivation des actionneurs périphériques 7, et la force de rappel ou de maintien exercée par les parties fixes 23 des pattes 5 sur le reste de la patte 5 et donc sur la plaque déformable 2.

Un autre exemple d'utilisation d'un dispositif d'optique adaptative 1 selon l'invention va être décrit ci-après, sans que cet exemple ne constitue une quelconque limitation quant aux utilisations possibles du dispositif d'optique adaptative 1 de l'invention. Selon cet exemple, le dispositif d'optique adaptative 1 modifie la forme du front d'onde incident. Le front d'onde incident est déformé, par exemple réfléchi et/ou réfracté, par la plaque déformable 2, résultant ainsi en un front d'onde déformé, par exemple réfléchi et/ou réfracté. Le front d'onde incident présente une phase qui est ainsi localement avancée ou retardée, par rapport au front d'onde réfléchi et/ou réfracté, suivant la forme géométrique de la plaque déformable 2 et en particulier de la face incidente 3. Les actionneurs périphériques 7 (éventuellement en combinaison avec ledit ou lesdits actionneurs additionnels 29), selon leurs combinaisons d'actionnement choisies et leur agencement au sein du dispositif d'optique adaptative 1, permettent à ce dernier de générer, au sein du front d'onde déformé, différents polynômes de Zernike (non présents notamment dans le front d'onde incident). Ainsi, en actionnant un ou plusieurs actionneurs périphériques 7 (et éventuellement additionnels 29), il est possible de générer différents polynômes de Zernike pour que la plaque déformable 2 introduise dans le front d'onde incident une ou plusieurs aberrations optiques telles que l'astigmatisme, le *« defocus »,* le « *trèfle* » ou « *trefoil* », et/ou encore le coma. Les différentes activations, susmentionnées ou non, des actionneurs périphériques 7 (et optionnellement d'un ou de plusieurs actionneurs additionnels 29, notamment un actionneur central 27) peuvent être combinés ensembles pour générer ou corriger des aberrations optiques plus complexes.

Toute combinaison des différents exemples et variantes susmentionnés est bien évidemment possible, au regard de ce qu'il semble pertinent dans le domaine technique concerné pour réaliser un dispositif d'optique adaptative approprié.

Optionnellement, ladite étape de formation de ladite plaque déformable 2 peut comprendre une étape de solidarisation, notamment par collage, brasage et/ou soudage, d'une plaque centrale sur ladite plaque brute 12, ladite plaque centrale comprenant avantageusement ladite face incidente 3. La plaque brute 12 est de préférence réalisée dans un matériau moins onéreux que celui dans lequel la plaque centrale est réalisée car ladite plaque brute 12 permet de former, par découpe par exemple, lesdites pattes 5, à un prix de revient avantageux. En effet, ladite plaque déformable 2 doit de préférence présenter une excellente qualité de surface et donc le matériau qui la constitue est généralement assez onéreux, alors que lesdites pattes 5 ont seulement besoin de présenter des propriétés mécaniques (élasticité notamment) appropriées, et pas un état de surface particulier.

De préférence, ladite étape commune de découpe et/ou ladite deuxième étape de découpe comprend une opération de gravure sélective.

Selon un mode de réalisation particulier, le procédé de fabrication comprend en outre une étape de traitement réfléchissant de ladite face incidente 3 pour former une face réfléchissante, ledit dispositif d'optique adaptative 1 étant un miroir déformable. Préférentiellement, ladite étape de traitement réfléchissant comprend une étape de recouvrement de ladite face incidente 3 par un revêtement réfléchissant. Cette étape de recouvrement peut par exemple comprendre une pulvérisation d'un élément réfléchissant sur ladite face incidente 3, de façon à former, au niveau de la face incidente 3, une face réfléchissante capable de réfléchir ledit front d'onde. Selon un exemple de réalisation, ladite étape de traitement réfléchissant est appliquée à ladite plaque centrale, du côté de ladite face incidente 3, pour former ladite face réfléchissante.

Le dispositif d'optique adaptative 1 de l'invention, de préférence obtenu via le procédé de fabrication de l'invention, permet de réaliser des opérations de déformation extrêmement fines d'un front d'onde incident dans un système d'optique adaptative, par réflexion et/ou réfraction du front d'onde, et ce pour des coûts d'entretien et de réalisation maîtrisés au moyen d'un réglage simple, précis et rapide.

### POSSIBILITE D'APPLICATION INDUSTRIELLE

L'invention trouve son application industrielle dans la conception, la fabrication et l'utilisation de dispositifs d'optique adaptative.

## Revendications

1. Dispositif d'optique adaptative (1) comportant une plaque déformable (2) destinée à déformer un front d'onde incident par réfraction et/ou réflexion, **caractérisé en ce qu'**il comprend en outre au moins :
- des pattes (5) attachées de manière fixe à ladite plaque déformable (2),
- un bâti (21) fixe par rapport à ladite plaque déformable (2),
- une pluralité d'actionneurs périphériques (7),
chaque patte (5) comprenant une partie mobile (22) reliée à au moins l'un des actionneurs périphériques (7) respectif pour que ce dernier puisse déformer localement ladite patte (5) afin que cette dernière transmette un effort de déformation à ladite plaque déformable (2), chaque patte (5) comprenant en outre une partie fixe (23) respective qui est attachée de manière fixe audit bâti (21) pour être immobilisée relativement à ce dernier.

2. Dispositif d'optique adaptative selon la revendication précédente, **caractérisé en ce que** ladite partie fixe (23) est immobilisée au moins en translation selon au moins une direction de fixation (F) relativement audit bâti (21).

3. Dispositif d'optique adaptative selon la revendication 1 ou 2, **caractérisé en ce que** ladite partie fixe (23) est :
- en liaison encastrement avec ledit bâti (21), sans degré de liberté vis-à-vis de ce dernier, ou
- en liaison pivot avec ledit bâti (21), ou
- en liaison rotule avec ledit bâti (21).

4. Dispositif d'optique adaptative selon l'une quelconque des revendications précédentes, **caractérisé en ce que** chaque patte (5) s'étend entre une extrémité proximale (24) respective attachée à ladite plaque déformable (2) et une extrémité distale (25) respective à l'opposé de ladite extrémité proximale (24), ladite partie fixe (23) comprenant de préférence ladite extrémité distale (25), laquelle est donc avantageusement attachée de manière fixe audit bâti (21).

5. Dispositif d'optique adaptative selon l'une quelconque des revendications précédentes, **caractérisé en ce que** chaque patte (5) est sensiblement plate et présente une forme globalement rectangulaire ou trapézoïdale.

6. Dispositif d'optique adaptative selon l'une quelconque des revendications précédentes, **caractérisé en ce que** ladite plaque déformable (2) et lesdites pattes (5) attachées à cette dernière forment ensemble un corps déformable d'un seul tenant en forme d'étoile à plusieurs branches, chaque branche étant formée par l'une desdites pattes (2).

7. Dispositif d'optique adaptative selon l'une quelconque des revendications précédentes, **caractérisé en ce que** ledit bâti (21) comprend un anneau rigide (8) au milieu duquel ladite plaque déformable (2) munie desdites pattes (5) est positionnée, ledit anneau rigide (8) présentant de préférence un épaulement interne (26) sur lequel lesdites pattes (2) sont fixées.

8. Dispositif d'optique adaptative (1) selon l'une quelconque des revendications précédentes, **caractérisé en ce que** l'une ou plusieurs desdites pattes (5) s'étendent sensiblement, au repos, dans le prolongement de ladite plaque déformable (2).

9. Dispositif d'optique adaptative (1) selon l'une quelconque des revendications précédentes, **caractérisé en ce que** ladite plaque déformable (2) présente un centre géométrique (C), chaque patte (5) s'étendant de préférence, à partir de ladite plaque déformable (2), radialement relativement audit centre géométrique (C), lesdites pattes (5) étant avantageusement réparties angulairement de façon uniforme autour dudit centre géométrique (C).

10. Dispositif d'optique adaptative (1) selon l'une quelconque des revendications précédentes, **caractérisé en ce que** lesdites pattes (5) sont venues de matière avec ladite plaque déformable (2).

11. Dispositif d'optique adaptative (1) selon l'une quelconque des revendications précédentes, **caractérisé en ce qu'**il comprend de préférence au moins quatre pattes (5).

12. Dispositif d'optique adaptative (1) selon l'une quelconque des revendications précédentes, **caractérisé en ce qu'**il constitue un miroir déformable et/ou une lentille adaptative.

13. Procédé de fabrication d'un dispositif d'optique adaptative (1) comportant une étape primaire de réalisation ou de fourniture d'une plaque déformable (2) destinée à déformer un front d'onde incident par réfraction et/ou réflexion, le procédé étant **caractérisé en ce qu'**il comprend en outre au moins :
- une étape secondaire de réalisation de pattes (5) attachées de manière fixe à ladite plaque déformable (2),
- une étape d'équipement, lors de laquelle une partie mobile (22) respective de chaque patte (5) est reliée à au moins un actionneur (7) respectif, de façon que ce dernier puisse déformer localement ladite patte (5) afin que cette dernière transmette un effort de déformation à ladite plaque déformable (2),
- une étape de fixation, lors de laquelle une partie fixe (23) respective de chaque patte (2) est attachée de manière fixe à un bâti (21) fixe par rapport à ladite plaque déformable (2) pour être immobilisée relativement à ce dernier.

14. Procédé de fabrication selon la revendication précédente, **caractérisé en ce que** lesdites étapes primaire et secondaire de réalisation sont au moins en partie confondues, et **en ce qu'**elles comprennent une étape commune de découpe d'une plaque brute (12) pour former lesdites pattes (5) et ladite plaque déformable (2), lesdites pattes (5) étant venues de matière avec ladite plaque déformable (2).

15. Procédé de fabrication selon la revendication 13, **caractérisé en ce que** ladite étape secondaire de réalisation comprend une étape de solidarisation desdites pattes (5) à ladite plaque déformable (2), par exemple par soudage, collage et/ou brasage.

## Patentansprüche

1. Adaptive optische Vorrichtung (1) mit einer verformbaren Platte (2), die dazu bestimmt ist, eine einfallende Wellenfront durch Brechung und/oder Reflexion zu verformen, **dadurch gekennzeichnet, dass** sie außerdem mindestens umfasst:
- Laschen (5), die fest an der verformbaren Platte (2) angebracht sind,
- ein Rahmen (21), der in Bezug auf die verformbare Platte (2) feststehend ist,
- eine Vielzahl von peripheren Stellgliedern (7),
jede Lasche (5) einen beweglichen Teil (22) umfasst, der mit mindestens einem der jeweiligen peripheren Stellglieder (7) verbunden ist, damit letzteres die Lasche (5) lokal verformen kann, so dass letztere eine Verformungskraft auf die verformbare Platte (2) überträgt, wobei jede Lasche (5) ferner einen jeweiligen festen Teil (23) umfasst, der fest an dem Rahmen (21) angebracht ist, um relativ zu diesem unbeweglich zu sein.

2. Adaptive optische Vorrichtung nach dem vorhergehenden Anspruch, **dadurch gekennzeichnet, dass** der feste Teil (23) zumindest translatorisch in mindestens einer Befestigungsrichtung (F) relativ zu dem Rahmen (21) unbeweglich ist.

3. Adaptive optische Vorrichtung nach Anspruch 1 oder 2, **dadurch gekennzeichnet, dass** der feste Teil (23):
- in bündiger Verbindung mit dem Rahmen (21) ist, ohne Freiheitsgrad gegenüber diesem, oder,
- in einer Schwenkverbindung mit dem Rahmen (21) ist, oder,
- in Kugelgelenkverbindung mit dem genannten Rahmen (21) ist.

4. Adaptive optische Vorrichtung nach einem der vorhergehenden Ansprüche, **dadurch gekennzeichnet, dass** sich jede Lasche (5) zwischen einem jeweiligen proximalen Ende (24), das an der verformbaren Platte (2) befestigt ist, und einem jeweiligen distalen Ende (25) gegenüber dem proximalen Ende (24) erstreckt, wobei der feste Teil (23) vorzugsweise das distale Ende (25) umfasst, das daher vorteilhafterweise fest an dem Rahmen (21) befestigt ist.

5. Adaptive optische Vorrichtung nach einem der vorhergehenden Ansprüche, **dadurch gekennzeichnet, dass** jede Lasche (5) im Wesentlichen flach ist und eine insgesamt rechteckige oder trapezförmige Form aufweist.

6. Adaptive optische Vorrichtung nach einem der vorhergehenden Ansprüche, **dadurch gekennzeichnet, dass** die verformbare Platte (2) und die daran befestigten Laschen (5) zusammen einen einteiligen verformbaren Körper in Form eines Sterns mit mehreren Zacken bilden, wobei jede Zacke von einem der Laschen (2) gebildet wird.

7. Adaptive optische Vorrichtung nach einem der vorhergehenden Ansprüche, **dadurch gekennzeichnet, dass** der Rahmen (21) einen starren Ring (8) umfasst, in dessen Mitte die mit den Laschen (5) versehene verformbare Platte (2) positioniert ist, wobei der starre Ring (8) vorzugsweise eine innere Schulter (26) aufweist, auf der die Laschen (2) befestigt sind.

8. Adaptive optische Vorrichtung nach einem der vorhergehenden Ansprüche, **dadurch gekennzeichnet, dass** eine oder mehrere der Laschen (5) sich im Ruhezustand im Wesentlichen in Verlängerung der verformbaren Platte (2) erstrecken.

9. Adaptive optische Vorrichtung nach einem der vorhergehenden Ansprüche, **dadurch gekennzeichnet, dass** die verformbare Platte (2) ein geometrisches Zentrum (C) aufweist, wobei sich jede Lasche (5) vorzugsweise ausgehend von der verformbaren Platte (2) radial relativ zu dem geometrischen Zentrum (C) erstreckt, wobei die Laschen (5) vorteilhafterweise winkelmäßig gleichmäßig um das geometrische Zentrum (C) verteilt sind.

10. Adaptive optische Vorrichtung nach einem der vorhergehenden Ansprüche, **dadurch gekennzeichnet, dass** die Laschen (5) aus einem Material mit der verformbaren Platte (2) gebildet sind.

11. Adaptive optische Vorrichtung nach einem der vorhergehenden Ansprüche, **dadurch gekennzeichnet, dass** sie vorzugsweise mindestens vier Laschen (5) umfasst.

12. Adaptive optische Vorrichtung nach einem der vorhergehenden Ansprüche, **dadurch gekennzeichnet, dass** sie einen verformbaren Spiegel und/oder eine adaptive Linse bildet.

13. Verfahren zur Herstellung einer adaptiven optischen Vorrichtung (1) mit einem primären Schritt der Herstellung oder Bereitstellung einer verformbaren Platte (2), die dazu bestimmt ist, eine einfallende Wellenfront durch Brechung und/oder Reflexion zu verformen, wobei das Verfahren **dadurch gekennzeichnet ist, dass** es außerdem mindestens umfasst:
- einen sekundären Schritt der Herstellung von Laschen (5), die fest an der verformbaren Platte (2) angebracht sind,
- einen Ausrüstungsschritt, bei dem ein jeweiliger beweglicher Teil (22) jeder Lasche (5) mit mindestens einem jeweiligen Stellglied (7) verbunden ist, so dass dieser die Lasche (5) lokal verformen kann, damit diese eine Verformungskraft auf die verformbare Platte (2) überträgt,
- einen Befestigungsschritt, bei dem ein jeweiliger fester Teil (23) jeder Lasche (2) fest an einem Rahmen (21) befestigt wird, der in Bezug auf die verformbare Platte (2) feststehend ist, um relativ dazu unbeweglich zu sein.

14. Herstellungsverfahren nach dem vorhergehenden Anspruch, **dadurch gekennzeichnet, dass** der primäre und der sekundäre Herstellungsschritt zumindest teilweise zusammenfallen und dass sie einen gemeinsamen Schritt des Schneidens einer Rohplatte (12) umfassen, um die Laschen (5) und die verformbare Platte (2) zu bilden, wobei die Laschen (5) aus einem Material mit der verformbaren Platte (2) gefertigt sind.

15. Herstellungsverfahren nach Anspruch 13, **dadurch gekennzeichnet, dass** der sekundäre Herstellungsschritt einen Schritt umfasst, bei dem die Laschen (5) fest mit der verformbaren Platte (2) verbunden werden, beispielsweise durch Schweißen, Kleben und/oder Löten.

## Claims

1. An adaptive optical device (1) including a deformable plate (2) intended to deform an incident wavefront by refraction and/or reflection, **characterized in that** it further comprises at least:
- legs (5) fixedly attached to said deformable plate (2),
- a frame (21) fixed with respect to said deformable plate (2),
- a plurality of peripheral actuators (7),
each leg (5) comprising a movable portion (22) connected to at least one respective of the peripheral actuators (7) so the latter could locally deform said leg (5) so that the latter transmits a deformation force to said deformable plate (2), each leg (5) further comprising a respective fixed portion (23) which is fixedly attached to said frame (21) so as to be immobilized with respect to the latter.

2. The adaptive optical device according to the preceding claim, **characterized in that** said fixed portion (23) is immobilized at least in translation according to at least one fastening direction (F) with respect to said frame (21).

3. The adaptive optical device according to claim 1 or 2, **characterized in that** said fixed portion (23) is:
- in embedded connection with said frame (21), without any degree of freedom relative to the latter, or
- in pivot connection with said frame (21), or
- in ball-joint connection with said frame (21).

4. The adaptive optical device according to any one of the preceding claims, **characterized in that** each leg (5) extends between a respective proximal end (24) attached to said deformable plate (2) and a respective distal end (25) opposite to said proximal end (24), said fixed portion (23) preferably comprising said distal end (25), which is therefore advantageously fixedly attached to said frame (21).

5. The adaptive optical device according to any one of the preceding claims, **characterized in that** each leg (5) is substantially flat and has a generally rectangular or trapezoidal shape.

6. The adaptive optical device according to any one of the preceding claims, **characterized in that** said deformable plate (2) and said legs (5) attached to the latter form together a deformable body in one-piece star-like shaped with several branches, each branch being formed by one of said legs (2).

7. The adaptive optical device according to any one of the preceding claims, **characterized in that** said frame (21) comprises a rigid ring (8) at the middle of which said deformable plate (2) provided with said legs (5) is positioned, said rigid ring (8) preferably having an inner shoulder (26) on which said legs (2) are fastened.

8. The adaptive optical device (1) according to any one of the preceding claims, **characterized in that** one of more of said legs (5) extend(s), at rest, substantially in the continuation of said deformable plate (2).

9. The adaptive optical device (1) according to any one of the preceding claims, **characterized in that** said deformable plate (2) has a geometric center (C), each leg (5) preferably extending, from said deformable plate (2), radially with respect to said geometric center (C), said legs (5) advantageously being angularly distributed evenly around said geometric center (C).

10. The adaptive optical device (1) according to any one of the preceding claims, **characterized in that** said legs (5) are integral with said deformable plate (2).

11. The adaptive optical device (1) according to any one of the preceding claims, **characterized in that** it preferably comprises at least four legs (5).

12. The adaptive optical device (1) according to any one of the preceding claims, **characterized in that** it constitutes a deformable mirror and/or an adaptive lens.

13. A method for manufacturing an adaptive optical device (1) including a primary step of making or providing a deformable plate (2) intended to deform an incident wavefront by refraction and/or reflection, the method being **characterized in that** it further comprises at least:
- a secondary step of making legs (5) fixedly attached to said deformable plate (2),
- an equipment step, during which a respective movable portion (22) of each leg (5) is connected to at least one respective actuator (7), so that the latter could locally deform said leg (5) so that the latter transmits a deformation force to said deformable plate (2),
- a fastening step, during which a respective fixed portion (23) of each leg (2) is fixedly attached to a frame (21) fixed with respect to said deformable plate (2) so as to be immobilized with respect to the latter.

14. The manufacturing method according to the preceding claim, **characterized in that** said primary and secondary making steps are at least partially concomitant, and **in that** they comprise a common step of cutting a raw plate (12) to form said legs (5) and said deformable plate (2), said legs (5) being integral with said deformable plate (2).

15. The manufacturing method according to claim 13, **characterized in that** said secondary making step comprises a step of securing said legs (5) to said deformable plate (2), for example by welding, gluing and/or brazing.
